# EUROPEAN PATENT APPLICATION

(11) **EP 3 181 618 A1**
(43) Date of publication of application: **21.06.2017**
(21) Application number: 15831347.8
(22) Date of filing: 22.07.2015
(51) Int. Cl.: C08J 5/22, B01J 39/20, B01J 41/14, B01J 47/12, B01D 61/46, B01D 69/12

(54) **POLYMER FUNCTIONAL FILM, STACK OR DEVICE PROVIDED WITH POLYMER FUNCTIONAL FILM, AND METHOD OF PRODUCING POLYMER FUNCTIONAL FILM**

(30) Priority: 14.08.2014 JP 2014165310; 21.01.2015 JP 2015009365
(71) Applicant: Fujifilm Corporation, Minato-ku Tokyo 106-8620 (JP)
(72) Inventor: HARADA, Motoi, Kanagawa 258-8577 (JP); TAKAMOTO, Tetsufumi, Kanagawa 258-8577 (JP)
(74) Representative: Hoffmann Eitle
(86) International application number: PCT/JP2015/070809
(87) International publication number: WO 2016/024465

(57) **Abstract**

A polymer functional film is provided which comprises a porous support body, and a resin layer and an auxiliary layer which are supported on the porous support body. Both the resin layer and the auxiliary layer contain an ion exchange polymer having either an anion exchange group or a cation exchange group. The charge of the ion exchange groups of the ion exchange polymers contained in the resin layer and the auxiliary layer are opposite, and the ion exchange polymers contained in the resin layer and the ancillary layer are both polymers that include a unit obtained from an acryloyl group optionally having an alkyl group at the α-position. In addition thereto, a stack or device provided with Said polymer functional film, and a method of producing the polymer functional film are provided.

## Description

### BACKGROUND OF THE INVENTION

### 1. Field of the Invention

The present invention relates to a functional polymer membrane, a stack or a device provided with a functional polymer membrane, and a method of producing a functional polymer membrane.

### 2. Description of the Related Art

As a membrane having various functions as a functional polymer membrane, an ion exchange membrane, a reverse osmosis membrane, a forward osmosis membrane, or a gas separation membrane is known.
For example, an ion exchange membrane is used for electrodeionization (EDI), continuous electrodeionization (CEDI), electrodialysis (ED), electrodialysis reversal (EDR), and reverse electrodialysis (RED). Further, recently, an ion exchange membrane is used for a solid polymer electrolyte fuel cell.
Here, electrodeionization (EDI) is a water treatment process of removing ions from an aqueous liquid by using an ion exchange membrane for the purpose of ion transport and utilizing a potential. This water treatment process is different from a water purification technique such as ion exchange of the related art and can be used to produce ultrapure water without using chemicals such as an acid or caustic soda. Electrodialysis (ED) and electrodialysis reversal (EDR) are electrochemical separation processes of removing ions or the like from water and other fluids.

In recent years, since an increase in nitric acid ion concentration of groundwater has been a problem on a global scale, a method of removing nitric acid ions through electrodialysis using an ion exchange membrane has been attracting attention. Prevention of precipitation (scaling) of sparingly soluble salts due to sulfuric acid ions is an essential issue and thus it is important for the membrane to selectively transmit monovalent ions, particularly, nitric acid ions for efficient removal. Therefore, in electrodialysis, development of a technique of selectively transmitting only monovalent ions has been actively promoted (for example, see JP1995-265863A (JP-H07-265863A) and JP2001-49009A).

For example, a multilayer ion exchange membrane that has a layer with a charge opposite to a charge of an ionic group of an ion exchange membrane on one surface of the ion exchange membrane (for example, see JP2001-49009A) has been known as a method of selectively transmitting only monovalent ions.
In addition, the multilayer ion exchange membrane has been suggested as an ion permeating amphoteric composite membrane (see JP1987-51297B (JP-S62-51297B)), a bipolar membrane, or a modified bipolar membrane (see JP1996-231736A (JP-H08-231736A)).

### SUMMARY OF THE INVENTION

JP2001-49009A discloses that a commercially available polystyrene-based strong base anion exchange resin or polystyrene-based strong cation exchange resin is kneaded with a binder resin and pressed by heating and melting using flat press to prepare an ion exchange membrane, and this membrane is coated with a polymer with an opposite charge, thereby producing an ion exchange membrane. JP1987-51297B (JP-S62-51297B) discloses that an ion exchange membrane is produced using a method of immersing a polysulfonic acid porous membrane for reinforcing non-woven fabric in a hydrolchloric acid aqueous solution of polyamine including an amino group and an ammonium group and cross-linking the amino group with a polyvalent acylating agent such as isophthalic acid dichloride or trimesic acid trichloride. The bipolar membrane or the modified bipolar membrane described in JP1996-231736A (JP-H08-231736A) is used to bond an anion exchange membrane to a cation exchange membrane and formed of a styrene derivative and a divinylbenzene derivative.

In regard to the composite ion exchange membranes described in JP2001-49009A, JP1987-51297B (JP-S62-51297B), and JP1996-231736A (JP-H08-231736A), a resin layer and an auxiliary layer are easily peeled off from each other and it takes a long time to produce a composite ion exchange membrane.
In addition, particularly, since polyvalent ions such as sulfuric acid ions cause precipitation of sparingly soluble salts, that is, so-called scaling, the ion exchange membrane needs to be replaced with another membrane in a short period of time, which is disadvantageous in cost.

Accordingly, an object of the present invention is to provide a high-performance functional polymer membrane in which transmission of polyvalent ions forming sparingly soluble salts such as sulfuric acid ions is suppressed and which selectively removes monovalent ions and represents an ion exchange membrane that prevents an auxiliary layer from being peeled off; a stack or a device provided with a functional polymer membrane; and a method of producing a functional polymer membrane which is capable of efficiently obtaining such a functional polymer membrane in a short time.

As a result of intensive research conducted by the present inventors, it was found that the above-described problems can be solved by using a polymer obtained by polymerizing and curing a monomer having a (meth)acryloyl group such as a (meth)acryloylamide group or a (meth)acryloyloxy group together with a resin layer and an auxiliary layer.

The object of the present invention can be achieved by the following means.
<1> A functional polymer membrane comprising: a porous support; and a resin layer and an auxiliary layer which are supported by the porous support, in which both of the resin layer and the auxiliary layer contain an ion exchange polymer having one of an anion exchange group or a cation exchange group, a charge of the ion exchange group of the ion exchange polymer included in the resin layer is opposite to a charge of the ion exchange group of the ion exchange polymer included in the auxiliary layer, and both of the ion exchange polymers respectively included in the resin layer and the auxiliary layer are polymers having a unit obtained from an acryloyl group which may have an alkyl group at an α-position.
<2> The functional polymer membrane according to <1>, in which the acryloyl group which may have an alkyl group at the α-position is an acryloylamino group or an acryloyloxy group which may have an alkyl group at the α-position.
<3> The functional polymer membrane according to <1> or <2>, in which the ion exchange polymer which includes the anion exchange group has a unit represented by the following Formula (IA). 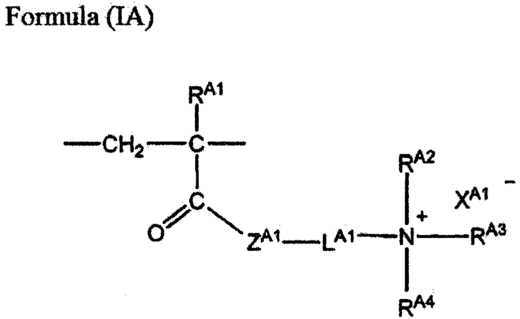
   In Formula (IA), R^{A1} represents a hydrogen atom or an alkyl group, R^{A2} to R^{A4} each independently represent an alkyl group or an aryl group, and here, two or more of R^{A2} to R^{A}4 may be bonded to each other to form a ring, Z^{A1} represents -O- or -N(Ra)-, and here, Ra represents a hydrogen atom or an alkyl group, L^{A1} represents an alkylene group, and X^{A1} represents a halogen ion or an aliphatic or aromatic carboxylic acid ion.
<4> The functional polymer membrane according to any one of <1> to <3>, in which the ion exchange polymer which includes the cation exchange group has a unit represented by the following Formula (IC). 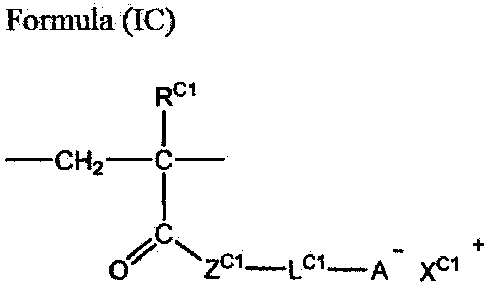
   In Formula (IC), R^{C1} represents a hydrogen atom or an alkyl group, Z^{C1} represents -O-, -N(Ra)-, or an alkylene group, and here, Ra represents a hydrogen atom or an alkyl group, L^{C1} represents an alkylene group or an arylene group, A⁻ represents SO₃⁻ or COO⁻, and X^{C1} represents a hydrogen atom or an inorganic or organic cation.
<5> The functional polymer membrane according to any one of <1> to <4>, in which both of the ion exchange polymers included in the resin layer and the auxiliary layer have a cross-linked structure.
<6> The functional polymer membrane according to any one of <1> to <5>, in which the ion exchange polymers included in the resin layer and the auxiliary layer have a unit represented by the following Formula (ICL). 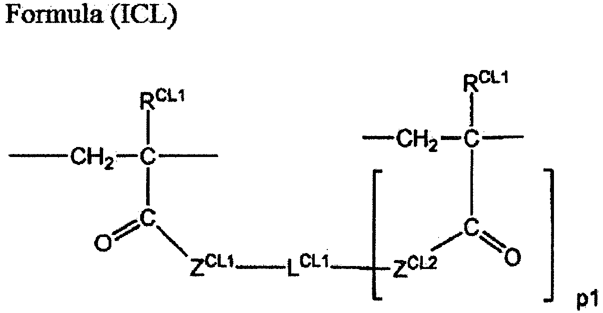
   In Formula (ICL), R^{CL1} represents a hydrogen atom or an alkyl group, Z^{CL1} and Z^{CL2} each independently represent -O- or -N(Ra)-, and here, Ra represents a hydrogen atom or an alkyl group, L^{CL1} represents a p1 + 1 valent linking group having 2 or more carbon atoms, and p1 represents an integer of 1 or greater.
<7> The functional polymer membrane according to <6>, in which the linking group as L^{CL1} of the above-described Formula (ICL) does not have an ion exchange group.
<8> The functional polymer membrane according to <6> or <7>, in which the linking group as L^{CL1} of the above-described Formula (ICL) is an alkylene group or an arylene group.
<9> The functional polymer membrane according to any one of <1> to <8>, in which the ion exchange group included in the ion exchange polymer of the resin layer is an anion exchange group.
<10> The functional polymer membrane according to any one of <1> to <8>, in which the ion exchange group included in the ion exchange polymer of the resin layer is a cation exchange group.
<11> The functional polymer membrane according to any one of <1> to <10>, in which the thickness of the auxiliary layer is 50% or less of the thickness of the resin layer.
<12> The functional polymer membrane according to any one of <1> to <11>, in which the thickness of the auxiliary layer is 20% or less of the thickness of the resin layer.
<13> The functional polymer membrane according to any one of <1> to <12>, in which the thickness of the auxiliary layer is 10% or less of the thickness of the resin layer.
<14> The functional polymer membrane according to any one of <1> to <13>, in which the porous support is non-woven fabric.
<15> The functional polymer membrane according to any one of <1> to <14>, which is an in exchange membrane.
<16> A stack comprising: the functional polymer membrane according to any one of <1> to <15>.
<17> A device comprising: the functional polymer membrane according to any one of <1> to <15>.
<18> A method of producing a functional polymer membrane including a porous support, and a resin layer and an auxiliary layer which are supported by the porous support, in which both of the resin layer and the auxiliary layer contain an ion exchange polymer having one of an anion exchange group or a cation exchange group, a charge of the ion exchange group of the ion exchange polymer included in the resin layer is opposite to a charge of the ion exchange group of the ion exchange polymer included in the auxiliary layer, and both of the ion exchange polymers respectively included in the resin layer and the auxiliary layer are polymers having a unit obtained from an acryloyl group which may have an alkyl group at the α-position, the method comprising: a process of impregnating or coating the porous support with a composition for forming the resin layer to form the resin layer through a polymerization curing reaction; and a process of coating the porous support with a composition for forming the auxiliary layer and forming the auxiliary layer through a polymerization curing reaction.
<19> The method of producing a functional polymer membrane according to <18>, in which the acryloyl group which may have an alkyl group at the α-position is an acryloylamino group or an acryloyloxy group which may have an alkyl group at the α-position.
<20> The method of producing a functional polymer membrane according to <18> or <19>, in which the composition for forming the resin layer or the composition for forming the auxiliary layer contains a compound represented by the following Formula (MA). 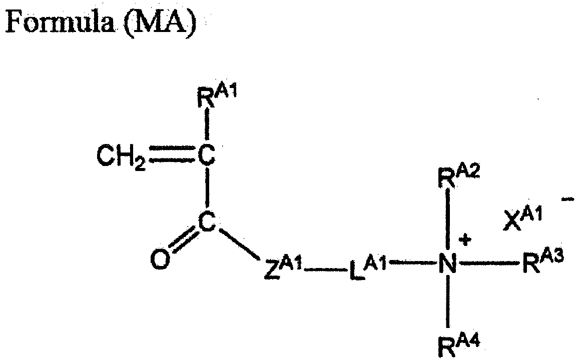
   In Formula (MA), R^{A1} represents a hydrogen atom or an alkyl group, R^{A2} to R^{A4} each independently represent an alkyl group or an aryl group, and here, two or more of R^{A2} to R^{A4} may be bonded to each other to form a ring, Z^{A1} represents -O- or -N(Ra)-, and here, Ra represents a hydrogen atom or an alkyl group, L^{A1} represents an alkylene group, and X^{A1} represents a halogen ion or an aliphatic or aromatic carboxylic acid ion.
<21> The method of producing a functional polymer membrane according to any one of <18> to <20>, in which the composition for forming the resin layer or the composition for forming the auxiliary layer contains a compound represented by the following Formula (MC). 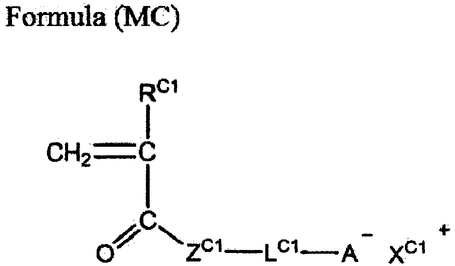
   In Formula (MC), R^{C1} represents a hydrogen atom or an alkyl group, Z^{C1} represents -O-, -N(Ra)-, or an alkylene group, and here, Ra represents a hydrogen atom or an alkyl group, L^{C1} represents an alkylene group or an arylene group, A⁻ represents SO₃⁻ or COO⁻, and X^{C1} represents a hydrogen atom or an inorganic or organic cation.
<22> The method of producing a functional polymer membrane according to any one of <18> to <21>, in which both of the composition for forming the resin layer or the composition for forming an auxiliary layer contain a cross-linking agent.
<23> The method of producing a functional polymer membrane according to <22>, in which the cross-linking agent is a compound represented by the following Formula (CL). 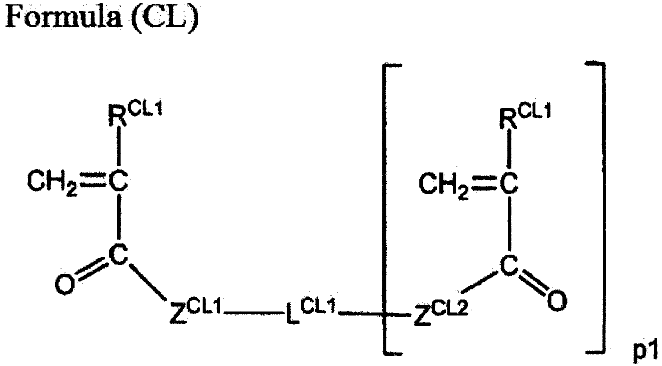
   In Formula (CL), R^{CL1} represents a hydrogen atom or an alkyl group, Z^{CL1} and Z^{CL2} each independently represent -O- or -N(Ra)-, and here, Ra represents a hydrogen atom or an alkyl group, L^{CL1} represents a p1 + 1 valent linking group having 2 or more carbon atoms, and p1 represents an integer of 1 or greater.
<24> The method of producing a functional polymer membrane according to <23>, in which the linking group as L^{CL1} of the above-described Formula (CL) does not have an ion exchange group.
<25> The method of producing a functional polymer membrane according to any one of <18> to <24>, in which the ion exchange group included in the ion exchange polymer of the resin layer is an anion exchange group.
<26> The method of producing a functional polymer membrane according to any one of <18> to <25>, in which the thickness of the auxiliary layer is 50% or less of the thickness of the resin layer.
<27> The method of producing a functional polymer membrane according to any one of <18> to <26>, in which the porous support is non-woven fabric.
<28> The method of producing a functional polymer membrane according to any one of <18> to <27>, in which both of the composition for forming the resin layer and the composition for forming the auxiliary layer contain a polymerization initiator.
<29> The method of producing a functional polymer membrane according to any one of <18> to <28>, in which the polymerization curing reaction is performed by irradiation with ultraviolet rays.

In the present specification, the numerical ranges shown using "to" indicate ranges including the numerical values described before and after "to" as the lower limits and the upper limits.
The term "(meth)acryloyl" indicates -C(=O)CH=CH₂ or -C(=O)C(CH₃)=CH₂, or both of these. For example, "(meth)acrylamide" indicates acrylamide or methacrylamide or both of these and "(meth)acrylate" indicates acrylate or methacrylate or both of these.
In the present specification, a group which has an alkyl group other than a methyl group at the α-position, such as a methacryloyl group, is also referred to as a (meth)acryloyl group in some cases unless otherwise noted.

Further, in each formula, in a case where a plurality of groups having the same symbol are present, these may be the same as or different from each other unless otherwise noted. Similarly, in a case where there are repetitions of a plurality of partial structures, these repetitions may be the same as each other or different repetitions may be mixed with each other in a defined range.

Further, for the convenience of description, geometric isomers which are substitution patterns of double bonds in each formula may indicate one isomer or may be an E-isomer or a Z-isomer or a mixture of these unless otherwise noted.

According to the present invention, it is possible to provide a high-performance functional polymer membrane in which transmission of polyvalent ions forming sparingly soluble salts such as sulfuric acid ions is suppressed and which selectively removes monovalent ions and represents an ion exchange membrane that prevents an auxiliary layer from being peeled off; and a stack or a device provided with a functional polymer membrane. Further, according to the method of producing a functional polymer membrane of the present invention, it is possible to efficiently provide such a functional polymer membrane in a short time.

### DESCRIPTION OF THE PREFERRED EMBODIMENTS

### «Functional polymer membrane»

A functional polymer membrane of the present invention can be used to perform ion exchange, reverse osmosis, forward osmosis, gas separation, or the like. Hereinafter, preferred embodiments of the present invention will be described based on an example of a case where the functional polymer membrane has functions as an ion exchange membrane.

### <Porous support>

The functional polymer membrane (hereinafter, also simply referred to as a "membrane") of the present invention includes a porous support. The porous support may constitute a part of the membrane by allowing a composition for forming a resin layer to be present in pores of the porous support and causing a polymerization curing reaction. Examples of the porous support serving as a reinforcing material include synthetic woven fabric, non-woven fabric such as synthetic non-woven fabric, a sponge-like film, and a film having fine through holes.
Hereinafter, the composition for forming a resin layer will be also referred to as a "composition for forming a resin layer" and the composition for forming an auxiliary layer will be also referred to as a "composition for forming an auxiliary layer".

Examples of materials forming the porous support of the present invention include a porous membrane based on polyethylene, polypropylene, polyacrylonitrile, polyvinyl chloride, polyester, polyamide, and copolymers of these; and a porous film based on polysulfone, polyether sulfone, polyphenylene sulfone, polyphenylene sulfide, polyimide, polyethermide, polyamide, polyamide imide, polyacrylonitrile, polycarbonate, polyacrylate, cellulose acetate, polypropylene, poly(4-methyl-1-pentene), polyvinylidene fluoride, polytetrafluoroethylene, polyhexafluoropropylene, polychlorotrifluoroethylene, and copolymers of these. Among these, in the present invention, polyolefin is preferable. Commercially available products of porous supports are manufactured by, for example, Mitsubishi Paper Mills Ltd., Nippon Kodoshi Corporation, Asahi Kasei Corporation, Japan Vilene Company, Ltd., TAPYRUS CO., LTD., and Freudenberg Filtration Technologies.
In addition, in a case where the polymerization curing reaction is carried out by irradiation with ultraviolet rays, the porous support and the reinforcing material are required not to shield a wavelength range of the ultraviolet rays, that is, the porous support and the reinforcing material are required to transmit irradiation of a wavelength used for polymerization and curing.

Further, it is preferable that the porous reinforcing material can be permeated with the composition for forming a resin layer.
In addition, it is preferable that the porous support has hydrophilicity. For the purpose of providing hydrophilicity for the porous support, a typical method such as a corona treatment, a plasma treatment, a fluorine gas treatment, an ozone treatment, a sulfuric acid treatment, or a silane coupling agent treatment can be used.

As the porous support of the present invention, non-woven fabric is preferable. Among examples of non-woven fabric, non-woven fabric formed of composite fibers of polyethylene and polypropylene is preferable. Further, the fiber diameter of the composite fiber is preferably in a range of 0.5 to 15 µm, more preferably in a range of 1 to 13 µm, and particularly preferably in a range of 2 to 10 µm.
The thickness of the porous support of the present invention is preferably in a range of 20 to 200 µm, more preferably in a range of 30 to 150 µm, and particularly preferably in a range of 40 to 120 µm.

### <Thickness of functional polymer membrane>

The thickness of the functional polymer membrane of the present invention is a thickness as a composite including a porous support, and a resin layer and an auxiliary layer which are supported by the porous support.
Specifically, the thickness of the functional polymer membrane of the present invention is a thickness of a functional polymer membrane after being stored in a 0.1 M NaCl solution for at least 12 hours as shown in the example.
In the present invention, the thickness of the functional polymer membrane is preferably less than 250 µm, more preferably in a range of 10 to 200 µm, still more preferably in a range of 30 to 200 µm, and particularly preferably in a range of 40 to 200 µm.
When the thickness is in the above-described range, the electrical resistance of the membrane can be suppressed to be low.

The functional polymer membrane of the present invention includes a resin layer and an auxiliary layer which are supported by the porous support, in which both of the resin layer and the auxiliary layer contain an ion exchange polymer having one of an anion exchange group and a cation exchange group, and a charge of the ion exchange group of the ion exchange polymer included in the resin layer is opposite to a charge of the ion exchange group of the ion exchange polymer included in the auxiliary layer.
In addition, both of the ion exchange polymers respectively included in the resin layer and the auxiliary layer are polymers having a unit obtained from an acryloyl group which may have an alkyl group at the α-position.
Here, as the acryloyl group which may have an alkyl group at the α-position, an acryloylamino group or acryloyloxy group which may have an alkyl group at the α-position is preferable and an acryloylamino group which may have an alkyl group at the α-position is more preferable.
Hereinafter, the resin layer and the auxiliary layer will be sequentially described in detail.

### <Resin layer>

The resin layer of the present invention contains an ion exchange polymer having one of an anion exchange group or a cation exchange group.

### [Ion exchange polymer having anion exchange group]

In the present invention, the ion exchange polymer having an anion exchange group may have any anion exchange group as long as the polymer has a unit obtained from an acryloyl group which may have an alkyl group at the α-position, and preferred examples thereof include a group, in which a nitrogen atom of a nitrogen-containing heterocycle is cationized, such as pyrrolidinium, piperidinium, morpholinium, or quinuclidinium; a group having a quaternized nitrogen atom; a group substituted with a substituent in which a nitrogen atom of an aromatic heterocycle is alkylated or arylated such as pyridinium; and a group having a quaternized amino group, that is, an onio group.
Among these, an ion exchange polymer having a unit represented by the following Formula (IA) is preferable.

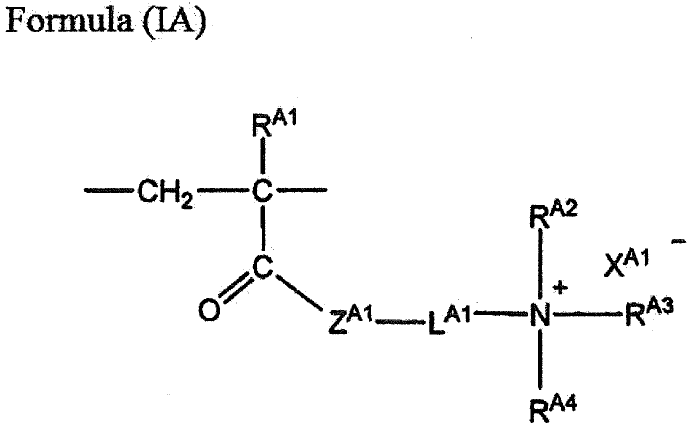

In Formula (IA), R^{A1} represents a hydrogen atom or an alkyl group, and R^{A2} to R^{A4} each independently represent an alkyl group or an aryl group. Here, two or more of R^{A2} to R^{A4} may be bonded to each other to form a ring. Z^{A1} represents -O- or -N(Ra)-. Here, Ra represents a hydrogen atom or an alkyl group. L^{A1} represents an alkylene group. X^{A1} represents a halogen ion or an aliphatic or aromatic carboxylic acid ion.

The alkyl group as R^{A1}, R^{A2} to R^{A4}, and Ra is a linear or branched alkyl group and the number of carbon atoms thereof is preferably in a range of 1 to 10, more preferably in a range of 1 to 6, still more preferably in a range of 1 to 4, particularly preferably 1 or 2, and most preferably 1. Examples of the alkyl group include methyl, ethyl, n-propyl, isopropyl, n-butyl, t-butyl, n-hexyl, n-octyl, 2-ethylhexyl, n-decyl, and i-decyl.

The number of carbon atoms of the aryl group as R^{A2} to R^{A4} is preferably in a range of 6 to 16, more preferably in a range of 6 to 12, and still more preferably in a range of 6 to 10, and examples thereof include phenyl and naphthyl.
The number of carbon atoms of the alkylene group as L^{A1} is preferably in a range of 1 to 10, more preferably in a range of 2 to 10, still more preferably in a range of 2 to 6, even still more preferably in a range of 2 to 4, particularly preferably 2 or 3, and most preferably 3, and examples thereof include methylene, ethylene, propylene, hexamethylene, octamethylene, and decamethylene.

Examples of the halogen ion as X^{A1} include a fluorine ion, a chlorine ion, a bromine ion, and an iodine ion.
The number of carbon atoms of the aliphatic carboxylic acid ion as X^{A1} is preferably in a range of 1 to 11, more preferably in a range of 2 to 7, still more preferably in a range of 2 to 5, particularly preferably 2 or 3, and most preferably 2.

The aliphatic carboxylic acid ion may be any of a carboxylic acid of saturated hydrocarbon and a carboxylic acid of unsaturated hydrocarbon, and a carboxylic acid of saturated hydrocarbon is preferable.
As the aromatic carboxylic acid ion as X^{A1}, an arylcarboxylic acid ion or a heteroarylcarboxylic acid ion is preferable. Here, a 5- or 6-membered ring is preferable as the heteroaryl. As a ring-constituting heteroatom, a nitrogen atom, an oxygen atom or a sulfur atom is preferable and a nitrogen atom is more preferable. The number of carbon atoms of the aromatic carboxylic acid ion is preferably in a range of 1 to 17, more preferably in a range of 2 to 13, and still more preferably in a range of 3 to 11, and examples thereof include a benzoic acid ion, a naphthalene carboxylic acid ion, a nicotinic acid ion, and an isonicotinic acid ion.

As a ring formed by two or more of R^{A2} to R^{A4} being bonded to each other, a 5- or 6-membered single ring or cross-linked ring is preferable, and the number of carbon atoms of the ring is preferably in a range of 4 to 16 and more preferably in a range of 4 to 10. Examples thereof include a pyrrolidine ring, a piperazine ring, a piperidine ring, a morpholine ring, a thiomorpholine ring, an indole ring, and a quinuclidine ring.

Each group as R^{A1} to R^{A4}, Ra, and L^{A1} may include a substituent and examples of such a substituent include substituents selected from the following substituent group α.

R^{A1} represents preferably a hydrogen atom or a methyl group and more preferably a hydrogen atom. R^{A1} to R^{A4} represent preferably a methyl group or an ethyl group. Z^{A1} represents preferably -N(Ra)- and Ra represents preferably a hydrogen atom. X^{A1} represents preferably a halogen ion.

Hereinafter, specific examples of the unit represented by Formula (IA) will be described, but the present invention is not limited thereto.

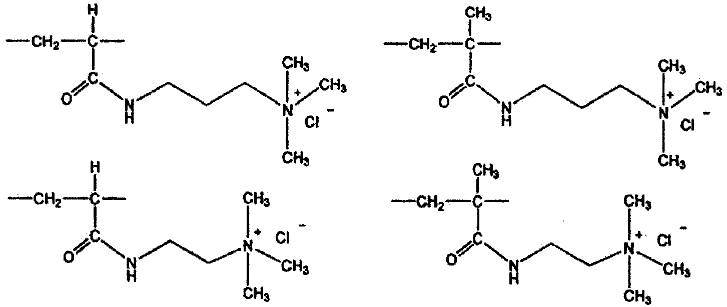

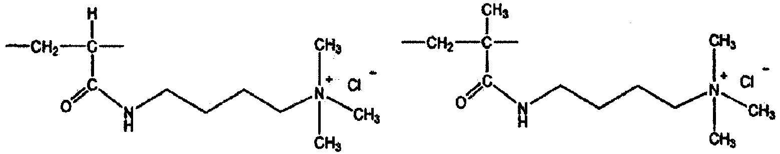

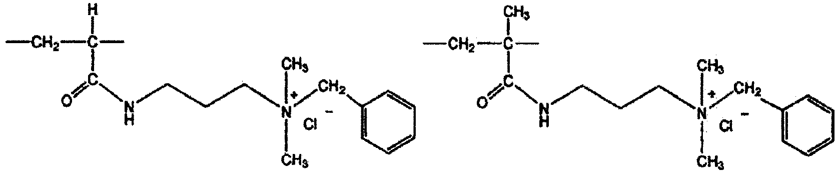

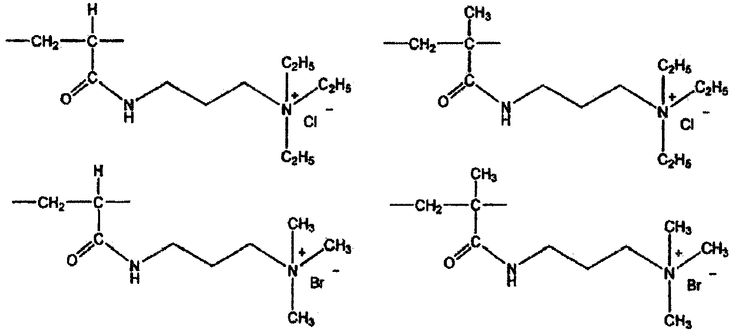

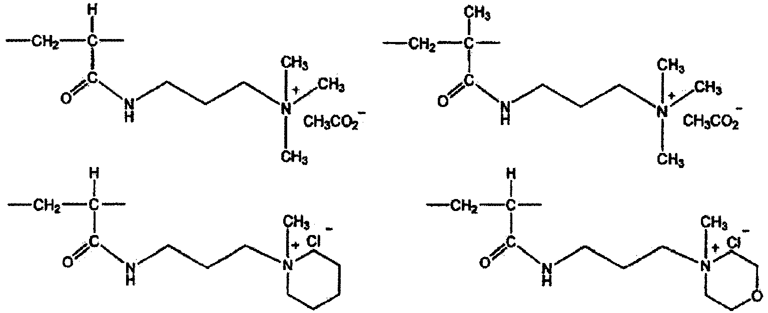

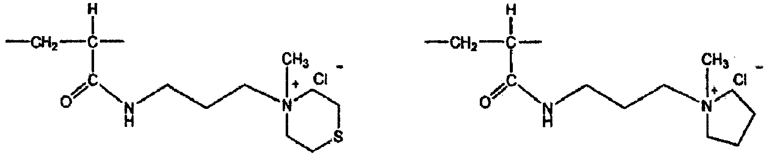

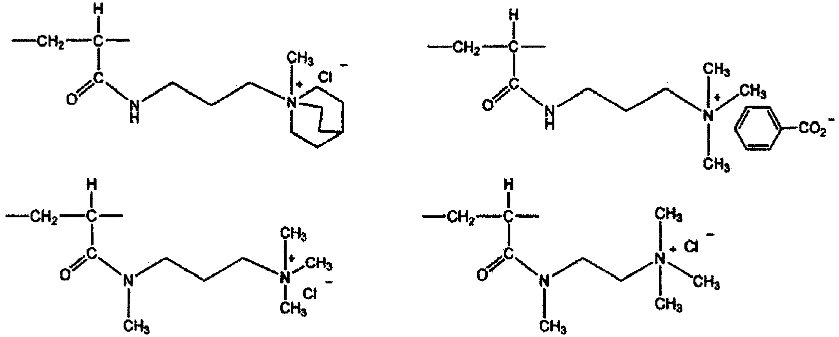

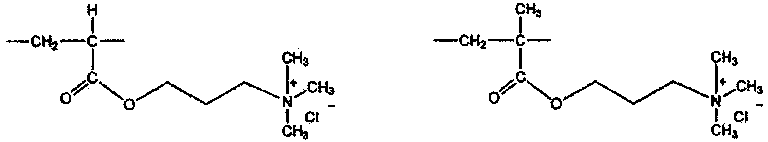

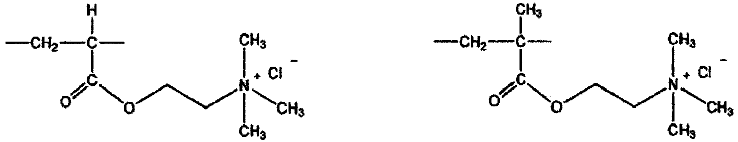

The unit represented by Formula (IA) can be obtained from a compound represented by the following Formula (MA).

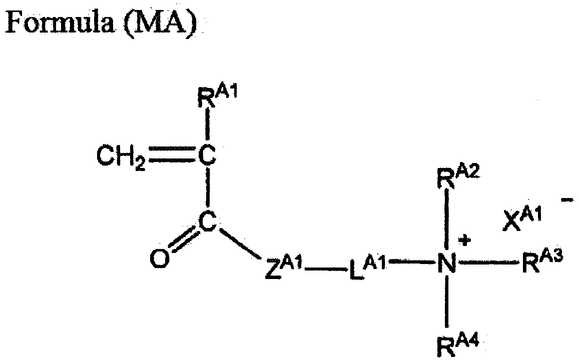

In Formula (MA), R^{A1} to R^{A4}, Z^{A1}, L^{A1}, and X^{A1} have the same definitions as those for R^{A1} to R^{A4}, Z^{A1}, L^{A1}, and X^{A1} in Formula (IA) and preferable ranges thereof are the same as described above.

Hereinafter, specific examples of the compound represented by Formula (MA) will be described, but the present invention is not limited thereto.

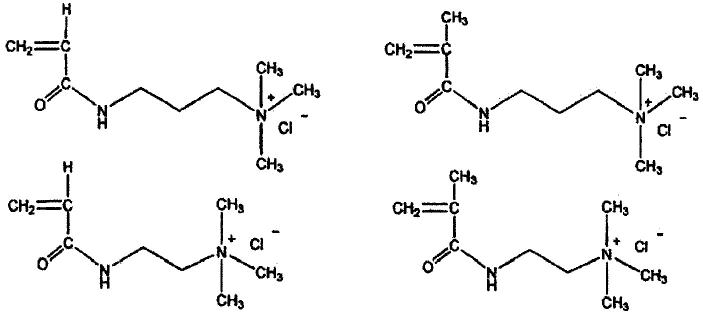

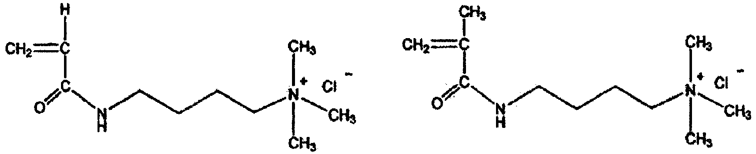

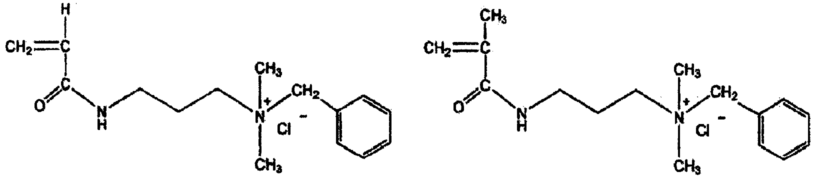

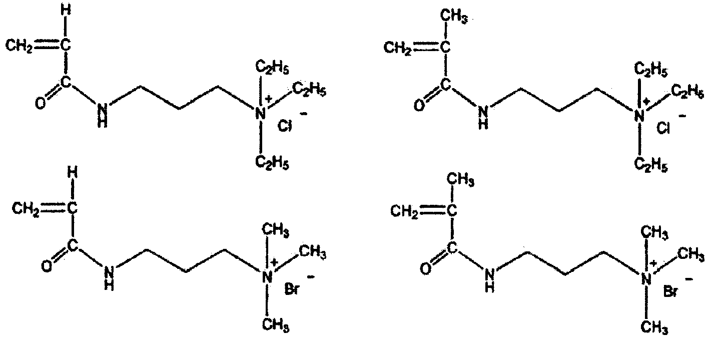

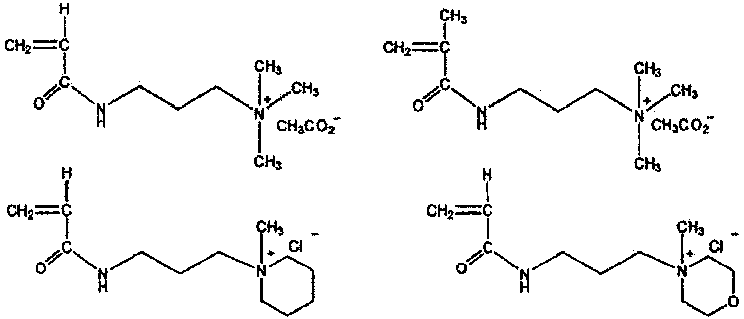

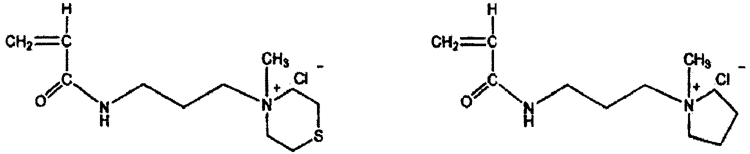

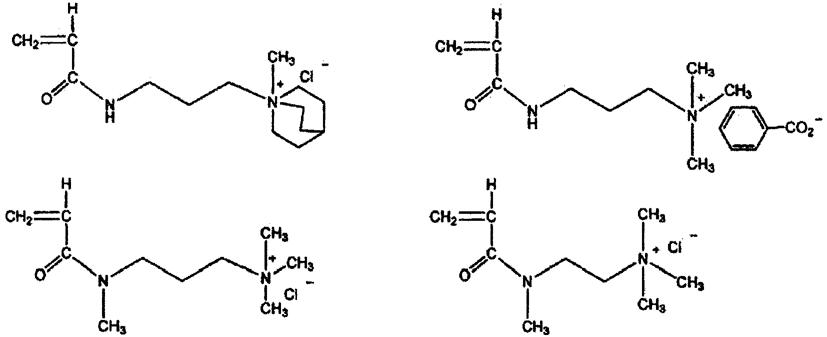

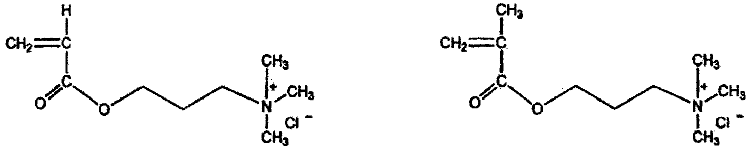

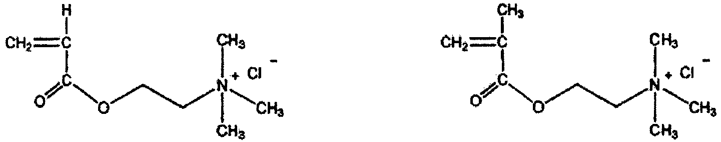

It is preferable that the ion exchange polymer including the anion exchange group of the present invention has a unit obtained from a cross-linking agent in addition to the unit represented by the above-described Formula (IA).
Here, in the present invention, it is preferable that the cross-linking agent does not have an ionic group.
In the present invention, it is preferable that the ion exchange polymer has a unit represented by the following Formula (ICL) among units obtained from a cross-linking agent.

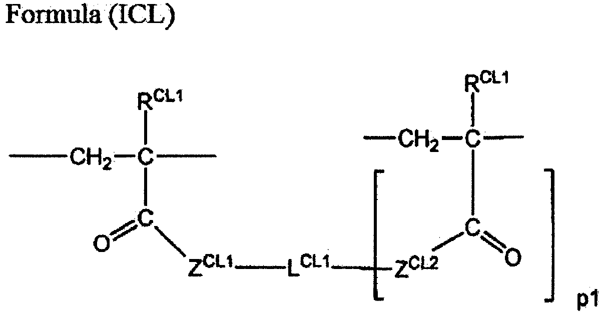

In Formula (ICL), R^{CL1} represents a hydrogen atom or an alkyl group. Z^{CL1} and Z^{CL2} each independently represent -O- or -N(Ra)-. Here, Ra represents a hydrogen atom or an alkyl group. L^{CL1} represents a p1 + 1 valent linking group having 2 or more carbon atoms. p1 represents an integer of 1 or greater.

Here, R^{CL1} has the same definition as that for R^{A1} in Formula (IA) and the preferable ranges thereof are the same as described above. Z^{CL1} and Z^{CL2} have the same definition as that for Z^{A1} in Formula (IA) and the preferable ranges thereof are the same as described above. Further, Ra has the same definition as that for Ra in Formula (IA) and the preferable ranges thereof are the same as described above.

p1 represents preferably an integer of 1 to 4, more preferably an integer of 1 to 3, still more preferably 1 or 2, and particularly preferably 1.

L^{CL1} represents a p1 + 1 valent linking group, and a p1 + 1 valent hydrocarbon group or a group formed by combining -O-, -S-, or -N(Ra)-, with a valence of p1 + 1, and a hydrocarbon group is preferable. Here, Ra represents a hydrogen atom or an alkyl group. The number of carbon atoms of the linking group is preferably in a range of 1 to 20 and more preferably in a range of 1 to 10.
In a case where Z^{CL1} and Z^{CL2} represent -N(Ra)-, it is preferable that L^{CL1} represents a p1 + 1 valent hydrocarbon group. The number of carbon atoms of such a hydrocarbon group is preferably in a range of 1 to 10, more preferably in a range of 1 to 6, still more preferably in a range of 1 to 3, and particularly preferably 1 or 2.
In a case where L^{CL1} represents a divalent hydrocarbon group, examples thereof include methylene, ethylene, propylene, hexamethylene, octamethylene, and decamethylene.
In a case where Z^{CL1} and Z^{CL2} represent -O-, it is preferable that L^{CL1} represents a group formed by combining -O-, -S- or -N(Ra)-, with a valence of p1 + 1, and a hydrocarbon group. Among these, a group formed by combining -O- and a hydrocarbon group is preferable.
In a case where L^{CL1} represents a divalent linking group, for example, an oxyalkylene group or a polyoxyalkylene group is preferable, and an oxyethylene group, a polyoxyethylene group, an oxypropylene group, and a polyoxypropylene group may be exemplified.

The linking group as L^{CL1} may include a substituent. It is preferable that such a substituent is a group selected from substituents other than groups serving as ionic groups, among the following substituent group α.
In the present invention, it is particularly preferable that the linking group as L^{CL1} is an unsubstituted group.

The unit represented by Formula (ICL) can be obtained from a compound represented by the following Formula (CL).

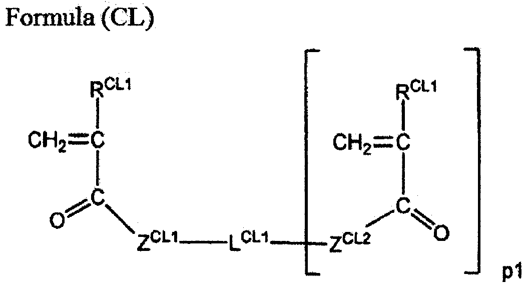

In Formula (CL), R^{CL1}, Z^{CL1}, Z^{CL2}, L^{CL1}, and p1 have the same definitions as those for R^{CL1}, Z^{CL1}, Z^{CL2}, L^{CL1}, and p1 of Formula (ICL) and preferable ranges thereof are the same as described above.

Hereinafter, specific examples of the compound represented by Formula (CL) will be described, but the present invention is not limited thereto.

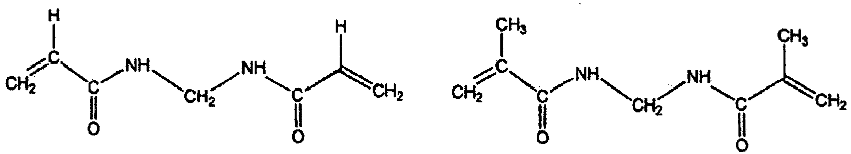

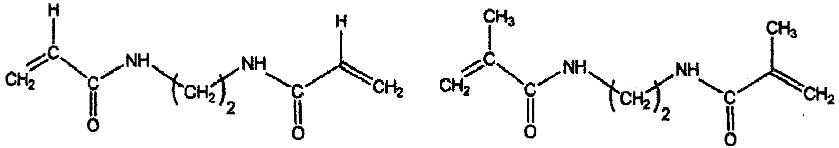

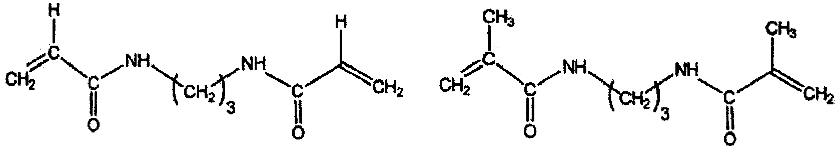

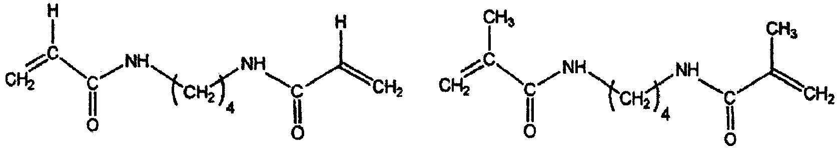

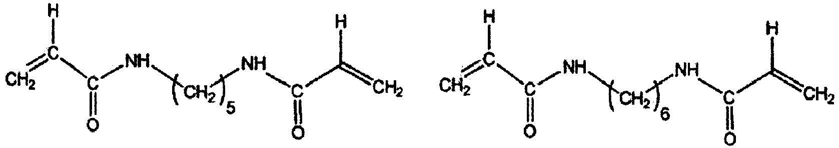

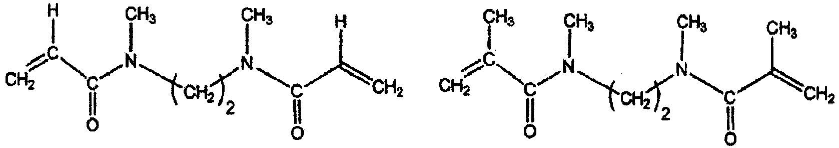

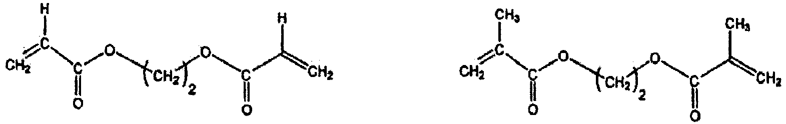

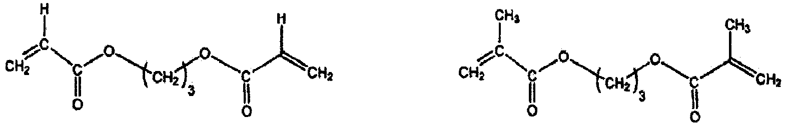

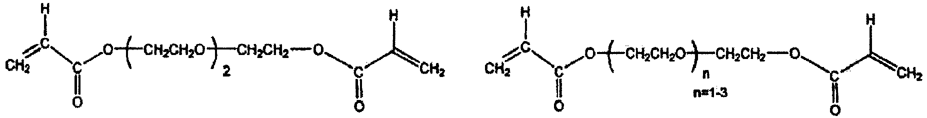

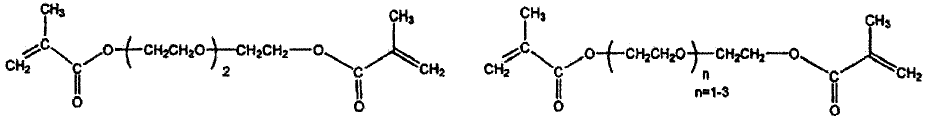

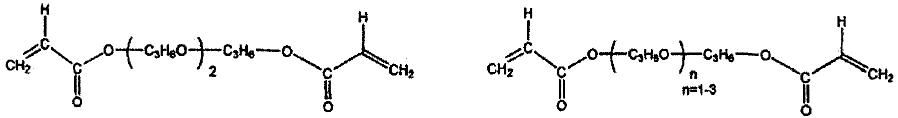

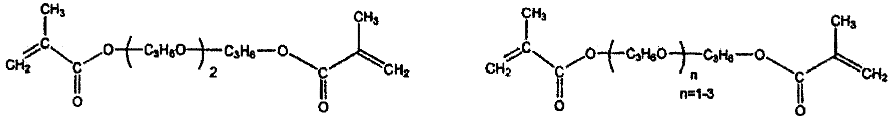

### [Ion exchange polymer having cation exchange group]

In the present invention, the ion exchange polymer having a cation exchange group may have any cation exchange group as long as the polymer has a unit obtained from an acryloyl group which may have an alkyl group at the α-position. As an example, a sulfo group or a salt thereof, a carboxy group or a salt thereof, and a phosphoric acid group or a salt are preferable and a sulfo group or a salt thereof and a carboxy group or a salt thereof are more preferable.

Among these, an ion exchange polymer having a unit represented by the following Formula (IC) is preferable.

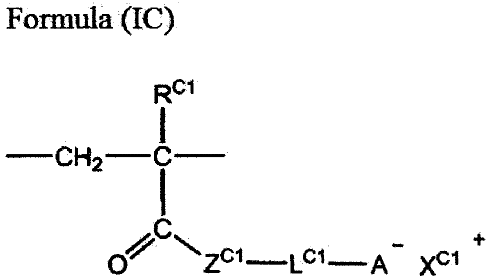

In Formula (IC), R^{C1} represents a hydrogen atom or an alkyl group. Z^{C1} represents -O-, -N(Ra)-, or an alkylene group. Here, Ra represents a hydrogen atom or an alkyl group. L^{C1} represents an alkylene group or an arylene group. A⁻ represents SO₃⁻ or COO⁻. X^{C1} represents a hydrogen atom or an inorganic or organic cation.

R^{C1} has the same definition as that for R^{A1} in Formula (IA) and the preferable ranges thereof are the same as described above.
Ra as Z^{C1} has the same definition as that for Ra in Formula (IA) and the preferable ranges thereof are the same as described above.
The number of carbon atoms of the alkylene group as Z^{C1} and L^{C1} is preferably in a range of 2 to 10, more preferably in a range of 2 to 8, and still more preferably in a range of 3 to 8, and examples thereof include ethylene, propylene, 1-methylmethylene, 1,1-dimethylmethylene, butylene, hexamethylene, and octamethylene.
The number of carbon atoms of the arylene group as L^{C1} is preferably in a range of 6 to 16, more preferably in a range of 6 to 12, and still more preferably in a range of 6 to 10, and examples thereof include phenylene and naphthylene.
In a case where both of Z^{C1} and L^{C1} represent an alkylene group, the number of carbon atoms of the -alkylene group-alkylene group- is preferably in a range of 2 to 10, more preferably in a range of 3 to 8, and still more preferably in a range of 4 to 6, and examples thereof include ethylene, propylene, 1-methylmethylene, 1,1-dimethylmethylene, butylene, pentamethylene, hexamethylene, and octamethylene.
The alkylene group or the arylene group as L^{C1} may include a substituent and examples of such a substituent include substituents selected from the following substituent group α.

It is preferable that L^{C1} represents an alkylene group.

As an inorganic cation as X^{C1}, an alkali metal ion is preferable and a lithium ion, a sodium ion, or a potassium ion is more preferable.
Examples of an organic cation as X^{C1} include a quaternary ammonium cation and a cation in which a nitrogen atom of an aromatic nitrogen-containing heterocycle is alkylated.
Examples of the quaternary ammonium cation include a tetramethylammonium cation, a tetraethylammonium cation, and a dimethylbenzylammonium cation and examples of the cation in which a nitrogen atom of an aromatic nitrogen-containing heterocycle is alkylated include a pyridinium cation.

It is preferable that X^{C1} represents a hydrogen atom, an alkali metal ion, a quaternary ammonium cation, or a pyridinium cation.

The unit represented by Formula (IC) can be obtained from a compound represented by the following Formula (MC).

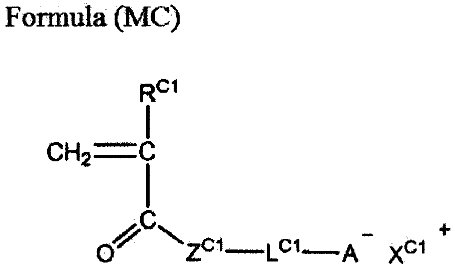

In Formula (MC), R^{C1}, Z^{C1}, L^{C1}, A⁻, and X^{C1} respectively have the same definitions as those for R^{C1}, Z^{C1}, L^{C1}, A⁻, and X^{C1} in Formula (IC) and the preferable ranges thereof are the same as described above.

Hereinafter, specific examples of the compound represented by Formula (MC) will be described, but the present invention is not limited thereto.

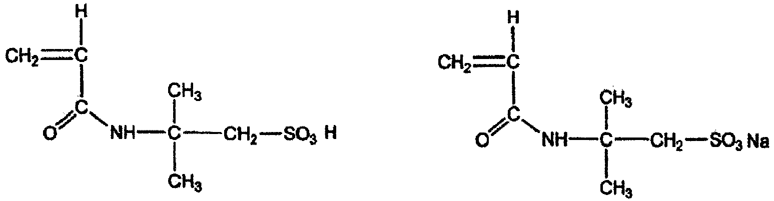

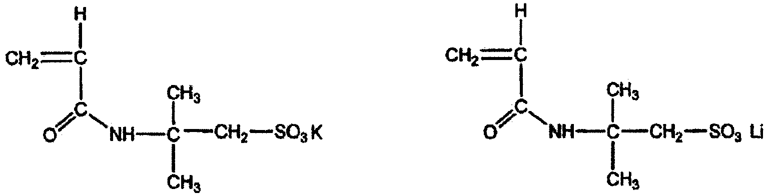

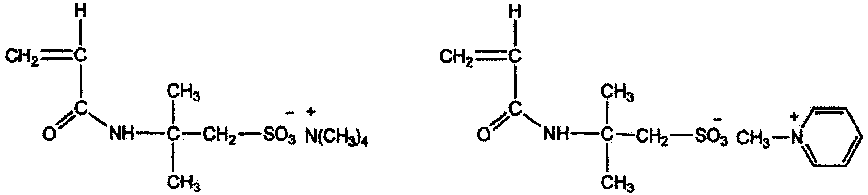

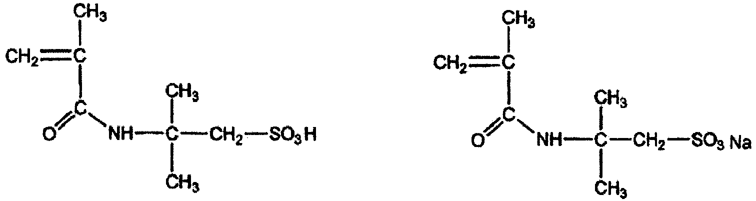

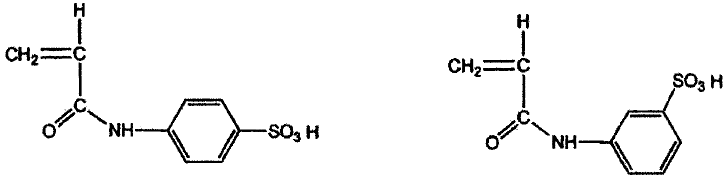

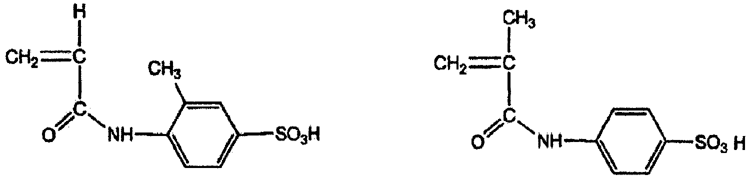

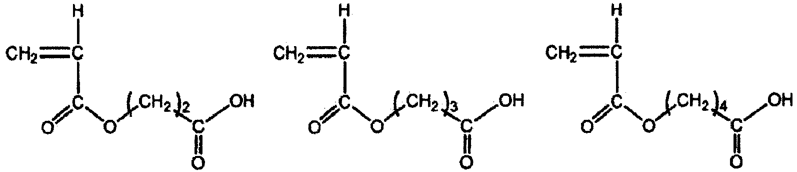

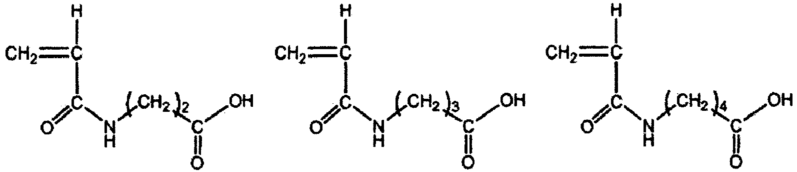

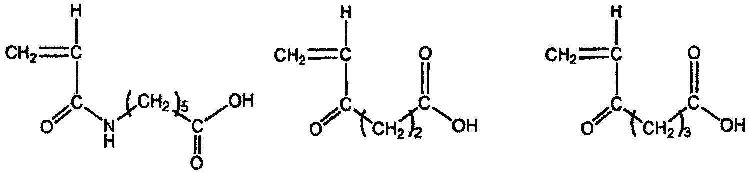

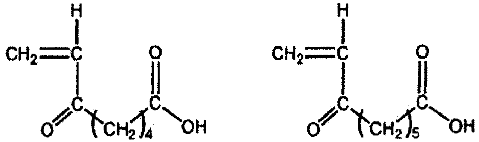

It is preferable that the ion exchange polymer including the cation exchange group of the present invention has a unit obtained from a cross-linking agent in addition to the unit represented by the above-described Formula (IC).
Here, in the present invention, it is preferable that the cross-linking agent does not have an ionic group.
In the present invention, it is preferable that the ion exchange polymer has a unit represented by the above-described Formula (ICL) among units obtained from a cross-linking agent.

Here, the substituent group α will be described.
The substituent group α is a group of substituents consisting of the following substituents.

### (Substituent group α)

The substituent group α includes:
an alkyl group (the number of carbon atoms of the alkyl group is preferably in a range of 1 to 30, more preferably in a range of 1 to 20, and particularly preferably in a range of 1 to 10, and examples thereof include methyl, ethyl, isopropyl, t-butyl, n-octyl, 2-ethylhexyl, n-decyl, and n-hexadecyl), a cycloalkyl group (the number of carbon atoms of the cycloalkyl group is preferably in a range of 3 to 30, more preferably in a range of 3 to 20, and particularly preferably in a range of 3 to 10, and examples thereof include cyclopropyl, cyclopentyl, and cyclohexyl), an alkenyl group (the number of carbon atoms of the alkenyl group is preferably in a range of 2 to 30, more preferably in a range of 2 to 20, and particularly preferably in a range of 2 to 10, and examples thereof include vinyl, allyl, 2-butenyl, and 3-pentenyl), an alkynyl group (the number of carbon atoms of the alkynyl group is preferably in a range of 2 to 30, more preferably in a range of 2 to 20, and particularly preferably in a range of 2 to 10, and examples thereof include propargyl and 3-pentynyl), an aryl group (the number of carbon atoms of the aryl group is preferably in a range of 6 to 30, more preferably in a range of 6 to 20, and particularly preferably in a range of 6 to 12, and examples thereof include phenyl, p-methylphenyl, naphthyl, and anthranyl), an amino group (such as an amino group, an alkylamino group, or an arylamino group; the number of carbon atoms of the amino group is preferably in a range of 0 to 30, more preferably in a range of 0 to 20, and particularly preferably in a range of 0 to 10 and examples thereof include amino, methylamino, dimethylamino, diethylamino, dibenzylamino, diphenylamino, and ditolylamino), an alkoxy group (the number of carbon atoms of the alkoxy group is preferably in a range of 1 to 30, more preferably in a range of 1 to 20, and particularly preferably in a range of 1 to 10, and examples thereof include methoxy, ethoxy, butoxy, and 2-ethylhexyloxy), an aryloxy group (the number of carbon atoms of the aryloxy group is preferably in a range of 6 to 30, more preferably in a range of 6 to 20, and particularly preferably in a range of 6 to 12, and examples thereof include phenyloxy, 1-naphthyloxy, and 2-naphthyloxy), a heterocyclic oxy group (the number of carbon atoms of the heterocyclic oxy group is preferably in a range of 2 to 30, more preferably in a range of 2 to 20, and particularly preferably in a range of 2 to 12, and examples thereof include pyridyloxy, pyrazyloxy, pyrimidyloxy, and quinolyloxy),
an acyl group (the number of carbon atoms of the acyl group is preferably in a range of 1 to 30, more preferably in a range of 1 to 20, and particularly preferably in a range of 1 to 12, and examples thereof include acetyl, benzoyl, formyl, and pivaloyl), an alkoxycarbonyl group (the number of carbon atoms of the alkoxycarbonyl group is preferably in a range of 2 to 30, more preferably in a range of 2 to 20, and particularly preferably in a range of 2 to 12, and examples thereof include methoxycarbonyl and ethoxycarbonyl), an aryloxycarbonyl group (the number of carbon atoms of the aryloxycarbonyl group is preferably in a range of 7 to 30, more preferably in a range of 7 to 20, and particularly preferably in a range of 7 to 12, and examples thereof include phenyloxycarbonyl), an acyloxy group (the number of carbon atoms of the acyloxy group is preferably in a range of 2 to 30, more preferably in a range of 2 to 20, and particularly preferably in a range of 2 to 10, and examples thereof include acetoxy and benzoyloxy), an acylamino group (the number of carbon atoms of the acylamino group is preferably in a range of 2 to 30, more preferably in a range of 2 to 20, and particularly preferably in a range of 2 to 10, and examples thereof include acetylamino and benzoylamino),
an alkoxycarbonylamino group (the number of carbon atoms of the alkoxycarbonylamino group is preferably in a range of 2 to 30, more preferably in a range of 2 to 20, and particularly preferably in a range of 2 to 12, and examples thereof include methoxycarbonylamino), an aryloxycarbonylamino group (the number of carbon atoms of the aryloxycarbonylamino group is preferably in a range of 7 to 30, more preferably in a range of 7 to 20, and particularly preferably in a range of 7 to 12, and examples thereof include phenyloxycarbonylamino), an alkyl or arylsulfonylamino group (the number of carbon atoms of the alkyl or arylsulfonylamino group is preferably in a range of 1 to 30, more preferably in a range of 1 to 20, and particularly preferably in a range of 1 to 12, and examples thereof include methanesulfonylamino and benzenesulfonylamino), a sulfamoyl group (such as a sulfamoyl group, or an alkyl or arylsulfamoyl group, the number of carbon atoms of the sulfamoyl group is preferably in a range of 0 to 30, more preferably in a range of 0 to 20, and particularly preferably in a range of 0 to 12, and examples thereof include sulfamoyl, methylsulfamoyl, dimethylsulfamoyl, and phenylsulfamoyl),
a carbamoyl group (such as a carbamoyl group or an alkyl or arylcarbamoyl group, the number of carbon atoms of the carbamoyl group is preferably in a range of 1 to 30, more preferably in a range of 1 to 20, and particularly preferably in a range of 1 to 12, and examples thereof include carbamoyl, methylcarbamoyl, diethylcarbamoyl, and phenylcarbamoyl), an alkylthio group (the number of carbon atoms of the alkylthio group is preferably in a range of 1 to 30, more preferably in a range of 1 to 20, and particularly preferably in a range of 1 to 12, and examples thereof include methylthio and ethylthio), an arylthio group (the number of carbon atoms of the arylthio group is preferably in a range of 6 to 30, more preferably in a range of 6 to 20, and particularly preferably in a range of 6 to 12, and examples thereof include phenylthio), a heterocyclic thio group (the number of carbon atoms of the heterocyclic thio group is preferably in a range of 2 to 30, more preferably in a range of 2 to 20, and particularly preferably in a range of 2 to 12, and examples thereof include pyridylthio, 2-benzimidazolylthio, 2-benzoxazolylthio, and 2-benzothiazolylthio),
an alkyl or arylsulfonyl group (the number of carbon atoms of the alkyl or arylsulfonyl group is preferably in a range of 1 to 30, more preferably in a range of 1 to 20, and particularly preferably in a range of 1 to 12, and examples thereof include mesyl and tosyl), an alkyl or arylsulfinyl group (the number of carbon atoms of the alkyl or arylsulfinyl group is preferably in a range of 1 to 30, more preferably in a range of 1 to 20, and particularly preferably in a range of 1 to 12, and examples thereof include methanesulfinyl and benzenesulfinyl), an ureido group (the number of carbon atoms of the ureido group is preferably in a range of 1 to 30, more preferably in a range of 1 to 20, and particularly preferably in a range of 1 to 12, and examples thereof include ureido, methylureido, and phenylureido), a phosphoric acid amide group (the number of carbon atoms of the phosphoric acid amide group is preferably in a range of 1 to 30, more preferably in a range of 1 to 20, and particularly preferably in a range of 1 to 12, and examples thereof include diethyl phosphoric acid amide and phenyl phosphoric acid amide), a hydroxy group, a mercapto group, a halogen atom (such as a fluorine atom, a chlorine atom, a bromine atom, or an iodine atom, and a fluorine atom is more preferable),
a cyano group, a sulfo group, a carboxyl group, an oxo group, a nitro group, a hydroxamic acid group, a sulfino group, a hydrazine group, an imino group, a heterocyclic group (the number of carbon atoms of the heterocyclic group is preferably in a range of 1 to 30 and more preferably in a range of 1 to 12, examples of a heteroatom constituting the ring include a nitrogen atom, an oxygen atom, and a sulfur atom, and specific examples thereof include imidazolyl, pyridyl, quinolyl, furyl, thienyl, piperidyl, morpholino, benzoxazolyl, benzimidazolyl, benzothiazolyl, a carbazolyl group, and an azepinyl group), a silyl group (the number of carbon atoms of the silyl group is preferably in a range of 3 to 40, more preferably in a range of 3 to 30, and particularly preferably in a range of 3 to 24, and examples thereof include trimethylsilyl and triphenylsilyl), and a silyloxy group (the number of carbon atoms of the silyloxy group is preferably in a range of 3 to 40, more preferably in a range of 3 to 30, and particularly preferably in a range of 3 to 24, and examples thereof include trimethylsilyloxy and triphenylsilyloxy).

These substituents may be substituted with any one or more substituents selected from the above-described substituent group α.
Further, in the present invention, when a plurality of substituents are present at one structural site, these substituents may be linked to each other and form a ring or may be fused with a part or entirety of the structural site and form an aromatic ring or an unsaturated heterocycle.

### <Auxiliary layer>

The auxiliary layer contains an ion exchange polymer having an ion exchange group with a charge opposite to a charge of an ion exchange group contained in the ion exchange polymer of the resin layer.
Therefore, in a case where the ion exchange group contained in the ion exchange polymer of the resin layer is an anion exchange group, the ion exchange group contained in the ion exchange polymer of the auxiliary layer is a cation exchange group. Further, in a case where the ion exchange group contained in the ion exchange polymer of the resin layer is a cation exchange group, the ion exchange group contained in the ion exchange polymer of the auxiliary layer is an anion exchange group.
As these ion exchange polymers, ion exchange polymers described in the ion exchange polymer contained in the resin layer are used.
In the present invention, it is preferable that the ion exchange group contained in the ion exchange polymer of the resin layer is an anion exchange group and the ion exchange group contained in the ion exchange polymer of the auxiliary layer is a cation exchange group.

The auxiliary layer may be provided on any one surface of the resin layer or both surfaces of the resin layer such that the resin layer is interposed therebetween.
Further, in a case where the auxiliary layers are provided on both surfaces of the resin layer such that the resin layer is interposed therebetween, the auxiliary layers on both surfaces may be completely the same as or different from each other and the thicknesses thereof may be the same as or different from each other. In the present invention, it is preferable that the auxiliary layers have the same thickness and are the same as each other.

The thickness of the resin layer is preferably in a range of 100 µm to 200 µm, more preferably in a range of 100 µm to 180 µm, and particularly preferably in a range of 100 µm to 160 µm.
Meanwhile, the thickness of the auxiliary layer is preferably in a range of 0.1 µm to 60 µm, more preferably in a range of 0.1 µm to 30 µm, and particularly preferably in a range of 0.1 µm to 10 µm.
Here, in the present invention, the thickness of the auxiliary layer is preferably 50% or less, more preferably 20% or less, and still more preferably 10% or less of the thickness of the resin layer.
In addition, the lower limit thereof is not particularly limited, but is typically 0.1% or greater.

In the present invention, when the thickness of the auxiliary layer is in the above-describe range, the electrical resistance of the membrane can be suppressed so that power consumption can be reduced through electrodialysis or the like in a case where the functional polymer membrane of the present invention is used for electrodialysis or the like.
Between a case where the auxiliary layer having an ionic group with the same charge as an ion exchange group of the resin layer is formed on one surface of the ion exchange membrane and a case where the auxiliary layer having an ionic group with a charge opposite to a charge of an ion exchange group of the resin layer is formed on one surface of the ion exchange membrane, the electrical resistance of the entire membrane in the latter case becomes larger than that of the former case because the charge is opposite to the charge of the ionic group of the surface layer and the electrical resistance is increased to prevent transmission of divalent or higher valent ions.
Therefore, it is preferable that an increase in electrical resistance of the membrane due to a decrease in thickness of the membrane is suppressed by setting the thickness of the auxiliary layer of the present invention to be in the above-described range.

### <Composition for forming resin layer or auxiliary layer>

The composition for forming a resin layer or an auxiliary layer of the present invention contains a compound represented by Formula (MA) in a case where the resin layer or the auxiliary layer contains an ion exchange polymer having an anion exchange group and contains a compound represented by Formula (MC) in a case where the resin layer or the auxiliary layer contains an ion exchange polymer having a cation exchange group. It is preferable that the composition for forming a resin layer or an auxiliary layer contains a cross-linking agent. As the cross-linking agent, a cross-linking agent represented by Formula (CL) is preferable.
In a case where the total solid content of the composition for forming a resin layer or an auxiliary layer is set to 100 parts by mass, the content of the compound represented by Formula (MA) or (MC) is preferably in a range of 20 to 90 parts by mass, more preferably in a range of 30 to 85 parts by mass, and still more preferably in a range of 35 to 80 parts by mass.
In a case where the total solid content of the composition for forming a resin layer or an auxiliary layer is set to 100 parts by mass, the content of the cross-linking agent is preferably in a range of 5 to 60 parts by mass, more preferably in a range of 10 to 50 parts by mass, and still more preferably in a range of 15 to 45 parts by mass.

### <Polymerization initiator>

It is preferable that the composition for forming a resin layer or an auxiliary layer of the present invention is polymerized and cured in the coexistence of a polymerization initiator. Accordingly, it is preferable that the composition for forming a resin layer or an auxiliary layer contains a polymerization initiator.

In the present invention, among polymerization initiators, photopolymerization initiators which are capable of initiating polymerization through irradiation with ultraviolet rays.
Examples of the photopolymerization initiators include aromatic ketones, an acylphosphine compound, an aromatic onium salt compound, an organic peroxide, a thio compound, a hexaarylbiimidazole compound, a ketoxime ester compound, a borate compound, an azinium compound, a metallocene compound, an active ester compound, a compound having a carbon halogen bond, and an alkylamine compound.
The polymerization initiator is not necessarily limited to a photopolymerization initiator as long as the polymerization initiator is dissolved in each of the above-described components or a solvent used at the time of a reaction. Examples of such a polymerization initiator include an oil-soluble peroxide-based thermal polymerization initiator such as benzoyl peroxide (BPO); an oil-soluble azo-based thermal polymerization initiator such as azobisisobutyronitrile (AIBN); and a water-soluble azo-based thermal polymerization initiator such as an azobiscyanovaleric acid (ACVA). Further, the proportion of water in a solvent of solution polymerization is large, a water-soluble peroxide-based thermal polymerization initiator such as ammonium persulfate or potassium persulfate; or hydrogen peroxide water can be used. Further, a combination of redox agents such as ferrocene or amines can be used.

Preferred examples of the aromatic ketones, the acylphosphine oxide compound, and the thio compound include compounds having a benzophenone skeleton or a thioxanthone skeleton described in "RADIATION CURING IN POLYMER SCIENCE AND TECHNOLOGY", pp. 77 to 117 (1993). More preferred examples thereof include an α-thiobenzophenone compound described in JP1972-6416B (JP-S47-6416B), a benzoin ether compound described in JP1972-3981B (JP-S47-3981B), an α-substituted benzoin compound described in JP1972-22326B (JP-S47-22326B), a benzoin derivative described in JP1972-23664B (JP-S47-23664B), aroylphosphonic acid ester described in JP1982-30704A (JP-S57-30704A), dialkoxybenzophenone described in JP1985-26483B (JP-S60-26483B), benzoin ethers described in JP1985-26403B (JP-S60-26403B) and JP1987-81345A (JP-S62-81345A), α-aminobenzophenones described in JP1989-34242B (JP-H01-34242B), the specification of US4318791A, and the specification of EP0284561A1, p-di(dimethylaminobenzoyl)benzene described in JP1990-211452A (JP-H02-211452A), thio-substituted aromatic ketone described in JP1986-194062A (JP-S61-194062A), acylphosphine sulfide described in JP1990-9597B (JP-H02-9597B), acyl phosphine described in JP1990-9596B (JP-H02-9596B), thioxanthones described in JP1988-61950B (JP-S63-61950B), and coumarins described in JP1984-42864B (JP-S59-42864B). Moreover, polymerization initiators described in JP2008-105379A and JP2009-114290A are also preferable. Further, polymerization initiators described in pp. 65 to 148 of "Ultraviolet Curing System" (published by United Engineering Center in 1989) written by Kiyoshi Kato may be exemplified.

In the present invention, a water-soluble polymerization initiator is preferable.
Here, when a polymerization initiator is water-soluble, 0.1% by mass or greater of the polymerization initiator is dissolved in distilled water at 25°C. It is preferable that 1% by mass or greater of the water-soluble polymerization initiator is dissolved in distilled water at 25°C and particularly preferable that 3% by mass or greater of the water-soluble polymerization initiator is dissolved in distilled water at 25°C.

In the present invention, the content of the polymerization initiator is preferably in a range of 0.1 to 10 parts by mass, more preferably in a range of 0.1 to 5 parts by mass, and still more preferably in a range of 0.3 to 2 parts by mass with respect to 100 parts by mass of the total solid content in the composition for forming a resin layer or an auxiliary layer.

### <Polymerization inhibitor>

It is preferable that the composition for forming a resin layer or an auxiliary layer of the present invention includes a polymerization inhibitor.
As the polymerization inhibitor, optional polymerization inhibitors can be used and examples thereof include a phenol compound, a hydroquinone compound, an amine compound, and a mercapto compound.
Specific examples of the phenol compound include hindered phenol (indicating phenol having a t-butyl group at an ortho position and 2,6-di-t-butyl-4-methylphenol is typically exemplified) and bisphenol. Specific examples of the hydroquinone compound include monomethyl ether hydroquinone. Further, specific examples of the amine compound include N-nitroso-N-phenylhydroxylamine and N,N-diethylhydroxylamine.
Moreover, these polymerization inhibitors may be used alone or in combination of two or more kinds thereof.
The content of the polymerization inhibitor is preferably in a range of 0.01 to 5 parts by mass, more preferably in a range of 0.01 to 1 part by mass, and still more preferably in a range of 0.01 to 0.5 parts by mass with respect to 100 parts by mass of the total solid content in the composition for forming a resin layer or an auxiliary layer.

### <Solvent>

The composition for forming a resin layer or an auxiliary layer of the present invention may contain a solvent. The content of the solvent in the composition for forming a resin layer or an auxiliary layer is preferably in a range of 5% to 40% by mass, more preferably in a range of 10% to 40% by mass, and still more preferably in a range of 20% to 40% by mass with respect to the total content of the composition for forming a resin layer or an auxiliary layer.
When the composition contains a solvent, a curing (polymerization) reaction uniformly and smoothly proceeds. Further, in a case where a porous support is impregnated with the composition for forming a resin layer or an auxiliary layer, this impregnation smoothly proceeds.

As the solvent, water or a mixed solution of water and a solvent having a solubility of 5% by mass or greater in water is preferably used and solvents which can be freely mixed into water are more preferable. Accordingly, solvents selected from water and water-soluble solvents are preferable.
Particularly preferred examples of the water-soluble solvents include an alcohol-based solvent, an ether-based solvent which is an aprotic polar solvent, an amide-based solvent, a ketone-based solvent, a sulfoxide-based solvent, a sulfone-based solvent, a nitrile-based solvent, and an organic phosphorous-based solvent.
Examples of the alcohol-based solvent include methanol, ethanol, isopropanol, n-butanol, ethylene glycol, propylene glycol, diethylene glycol, and dipropylene glycol. These may be used alone or in combination of two or more kinds thereof.
Further, preferred examples of the aprotic polar solvent include dimethyl sulfoxide, dimethylimidazolidinone, sulfolane, N-methylpyrrolidone, dimethylformamide, acetonitrile, acetone, dioxane, tetramethylurea, hexamethylphosphoramide, hexamethylphosphorotriamide, pyridine, propionitrile, butanone, cyclohexane, tetrahydrofuran, tetrahydropyran, ethylene glycol diacetate, and γ-butyrolactone. Among these, dimethyl sulfoxide, N-methylpyrrolidone, dimethylformamide, dimethylimidazolidinone, sulfolane, acetone or acetonitrile, and tetrahydrofuran are more preferable. These may be used alone or in combination of two or more kinds thereof.

### [Alkali metal compound]

The composition for forming a resin layer or an auxiliary layer of the present invention may include an alkali metal compound in order to improve the solubility of the compound represented by Formula (CL). Preferred examples of the alkali metal compound include hydroxide salts, chloride salts, and nitrate of lithium, sodium, and potassium. Among these, a lithium compound is more preferable and specific examples thereof include lithium hydroxide, lithium chloride, lithium bromide, lithium nitrate, lithium iodide, lithium chlorate, lithium thiocyanate, lithium perchlorate, lithium tetrafluoroborate, lithium hexafluorophosphate, and lithium hexafluoroarsenate.
Here, it is also preferable that the alkali metal compound is used to neutralize a composition solution mixture for forming a resin layer or an auxiliary layer.
These alkali metal compounds may be hydrates and may be used alone or in combination of two or more kinds thereof.
The amount of the alkali metal compound to be added to the composition for forming a resin layer or an auxiliary layer is preferably in a range of 0.1 to 20 parts by mass, more preferably in a range of 1 to 20 parts by mass, and still more preferably in a range of 5 to 20 parts by mass with respect to 100 parts by mass of the total solid content in the composition for forming a resin layer or an auxiliary layer.

### [Other compounds]

The composition for forming a resin layer or an auxiliary layer of the present invention may contain a surfactant, a viscosity improver, a surface tension adjustor, and a preservative as necessary.

### «Method of producing functional polymer membrane»

Next, the method of producing a functional polymer membrane of the present invention will be described.
The method of producing a functional polymer membrane includes a process of impregnating or coating the porous support with the composition for forming the resin layer to form the resin layer through a polymerization curing reaction; and a process of coating the porous support with the composition for forming the auxiliary layer to form the auxiliary layer through a polymerization curing reaction.

Hereinafter, an example of the method of producing a functional polymer membrane of the present invention will be described in detail.

### (Preparation of resin layer)

The resin layer of the present invention can be prepared using a temporary support (peeled off from the membrane after a curing reaction is finished). In this case, since a porous support which becomes a part of the functional polymer membrane is used in the present invention, it is preferable that the resin layer is prepared using this porous support without using a temporary support.
Further, the resin layer can be prepared using a fixed porous support according to a batched type (batched system) or using a moving porous support according to a continuous type (continuous system).
Moreover, in a case where a temporary support is used, it is not necessary to consider substance permeation and the temporary support is not particularly limited as long as the support include a metal plate such as an aluminum plate and can be fixed for film formation.

The porous support can be coated or impregnated with the composition for forming a resin layer using various methods such as curtain coating, extrusion coating, air-knife coating, slide coating, nip roll coating, forward roll coating, reverse roll coating, dip coating, kiss coating, rod bar coating, or spray coating. A plurality of layers can be coated simultaneously or continuously. For simultaneous multilayer coating, curtain coating, slide coating, slot die coating, or extrusion coating is preferable.

When a continuous system of a resin layer is used, it is preferable that the moving porous support is continuously coated with the composition for forming a resin layer used in the present invention, film formation is carried out by polymerization and curing, and then formed film is collected. Accordingly, it is preferable that a resin layer is produced by using a producing unit that includes means for moving a composition coating unit for forming a resin layer (or an impregnating unit), an irradiation source for polymerizing and curing the composition for forming a resin layer, a film winding unit (or a collecting unit) which collects a formed film, and a porous support from the composition coating unit for forming a resin layer (or an impregnating unit) to the irradiation source and the film winding unit.

In the present production example, the resin layer of the present invention is produced by performing a process of (i) coating or impregnating a porous support with the composition for forming a resin layer of the present invention and a process of (ii) irradiating the composition for forming a resin layer with light and causing a polymerization curing reaction in the composition through heating as necessary.

### [Irradiation with energy rays]

In the production unit, the composition coating unit for forming a resin layer (or an impregnating unit) is provided on the upstream side of the irradiation source and the irradiation source is disposed on the upstream side of the film winding unit.
At the time of application using a high-speed coating machine, from the viewpoint of having sufficient fluidity, the viscosity of the composition for forming a resin layer of the present invention is measured at 35°C and is preferably less than 4,000 mPa·s, more preferably in a range of 1 to 1,000 mPa·s, and most preferably in a range of 1 to 500 mPa·s. In a case of slid bead coating, the viscosity thereof at 35°C is preferably in a range of 1 to 100 mPa·s.

In the high-speed coating machine, a moving porous support can be coated with a coating solution which is the composition for forming a resin layer at a speed of faster than 15 m/min and can be also coated at a speed of faster than 20 m/min.

Particularly in a case where a porous support is used to increase the mechanical strength, the porous support may be subjected to a corona discharge treatment, a glow discharge treatment, a flame treatment, or an ultraviolet irradiation treatment in order to improve wettability and adhesive force of the porous support before the surface of the porous support is coated with the composition for forming a resin layer of the present invention.

The polymerization and curing of the composition for forming a resin layer of the present invention is started in preferably 60 seconds, more preferably 15 seconds, particularly preferably 5 seconds, and most preferably 3 seconds after the porous support is coated or impregnated with the composition for forming a resin layer.
The irradiation with light for the polymerization and curing of the composition is carried out for preferably less than 10 seconds, more preferably less than 5 seconds, particularly preferably less than 3 seconds, and most preferably less than 2 seconds. The irradiation with light is continuously carried out in a case of the continuous method and the time for the polymerization curing reaction is determined in consideration of the speed at which the composition for forming a resin layer moves through irradiation beams.

Since a large amount of heat is generated in a case where ultraviolet rays (UV light) with high intensity are used for the polymerization curing reaction, it is preferable that at least one (preferably the entirety) of a lamp serving as a light source, a porous support, or the formed membrane are cooled with cooling air in order to prevent overheating. In a case where a significant amount of ultraviolet rays (IR light) are applied together with UV beams, UV light is applied using an IR reactive quartz plate as a filter.

Ultraviolet rays are preferable as energy rays. It is preferable that the irradiation wavelength is compatible with an absorption wavelength of an arbitrary photopolymerization initiator included in the composition for forming a resin layer and UV-A (400 to 320 nm), UV-B (320 to 280 nm), and UV-C (280 to 200 nm) may be exemplified.

Examples of UV sources include a mercury arc lamp, a carbon arc lamp, a low-pressure mercury lamp, a medium-pressure mercury lamp, a high-pressure mercury lamp, a swirling flow plasma arc lamp, a metal halide lamp, a xenon lamp, a tungsten lamp, a halogen lamp, a laser light emitting diode, and an ultraviolet light emitting diode. A medium-pressure or high-pressure mercury vapor type ultraviolet light emitting lamp is particularly preferable as a UV source. In addition, in order to modify the emission spectrum of a lamp, additives such as a metal halide may be present. A lamp with maximum emission at a wavelength of 200 to 450 nm is particularly suitable.

The energy output of the irradiation source is preferably in a range of 20 to 1,000 W/cm and more preferably in a range of 40 to 500 W/cm, and the exposure amount may be low or high if a desired exposure amount can be realized. The polymerization and curing of the resin layer are adjusted by exposure intensity. The exposure amount is measured in the range of UV-A shown by a device using High Energy UV Radiometer (UV Power Puck™, manufactured by EIT-Instrument Markets) and is preferably at least 40 mJ/cm² or greater, more preferably in a range of 100 to 2,000 mJ/cm², and most preferably in a range of 150 to 1,500 mJ/cm². The exposure time can be freely selected, but is preferably short and most preferably less than 2 seconds.

Moreover, in a case where the coating speed is high, a plurality of light sources may be used in order to obtain the exposure amount which is required. In this case, the exposure intensities of the plurality of light sources may be the same as or different from each other.

### (Preparation of auxiliary layer)

The auxiliary layer is formed by performing a process of (i') coating one or both surfaces of the above-described prepared resin layer with the composition for forming an auxiliary layer of the present invention and a process of (ii') irradiating the composition for forming an auxiliary layer with light and causing a polymerization curing reaction in the composition through heating as necessary. These processes (i') and (ii') are the same as the processes (i) and (ii) in the preparation of a resin layer except the description related to the porous support.
Further, in order to improve adhesiveness of the resin layer to the auxiliary layer, the surface of the resin layer may be subjected to a roughening treatment using sand paper or the like, a corona treatment, or a plasma treatment, as a pre-treatment of the application of the composition for forming an auxiliary layer.

### «Applications of functional polymer membrane»

The functional polymer membrane of the present invention is mainly intended to be used for ion exchange. However, the functional polymer membrane of the present invention is not limited to ion exchange and can be suitably used for reverse osmosis and gas separation.
As described above, the functional polymer membrane of the present invention is useful as an ion exchange membrane that selectively transmits monovalent ions, can be used for electrodeionization, continuous electrodeionization, electrodialysis, electrodialysis reversal, reverse electrodialysis, or these devices, and can be used for not only general purpose but also medical applications. Recently, the functional polymer membrane can be used for a solid polymer electrolyte fuel cell.
Further, the applications of the functional polymer membrane of the present invention are not particularly limited, but the functional polymer membrane can be used for a device and the like in the form described above of a single functional polymer membrane or a stack.
Here, the term "stack" indicates a module in which an anion exchange membrane and a cation exchange membrane are alternately disposed between a pair of electrodes. In the present invention, a functional polymer membrane having the auxiliary layer of the present invention and the resin layer containing an ion exchange polymer that has an anion exchange group is used as the anion exchange membrane and a functional polymer membrane having the auxiliary layer of the present invention and the resin layer containing an ion exchange polymer that has a cation exchange group is used as this cation exchange membrane.

### Examples

Hereinafter, the present invention will be described in detail based on examples, but the present invention is not limited thereto. Further, "part" and "%" are on a mass basis unless otherwise noted.

### (Preparation of coating solution of composition for forming resin layer or auxiliary layer)

A coating solution of a composition for forming a resin layer or an auxiliary layer containing an anion exchange group and a coating solution of a composition for forming a resin layer or an auxiliary layer containing a cation exchange group were respectively prepared with the compositions (unit: g) listed in the following Table 1.
Further, "-" in Table 1 indicates that the component was not contained. Further, the composition for forming a resin layer or an auxiliary layer was simply described as the "composition" in the following Table 1.

**[Table 1]**

| Type of material | Name of material | Composition A-1 | Composition A-2 | Composition B-1 | Composition B-2 | Composition B-3 | Composition B-4 | Composition B-5 |
|---|---|---|---|---|---|---|---|---|
| | | Composition containing anion exchange group | Composition containing anion exchange group | Composition containing cation exchange group | Composition containing cation exchange group | Composition containing cation exchange group | Composition containing cation exchange group | Composition containing cation exchange group |
| Monofunctional monomer | DMAPAA-Q | 40.00 | 40.00 | - | - | - | - | - |
| | AMPS | - | - | 42.61 | 42.61 | - | - | - |
| | Carboxyethylacrylate | - | - | - | - | 44.00 | - | - |
| | 6-Acrylamidohexanoic acid | - | - | - | - | - | 47.80 | - |
| | 7-Oxo-8-nonenoic acid | - | - | - | - | - | - | 45.40 |
| Cross-linking agent | MBA | 9.90 | 6.9 | 16.01 | 13.01 | 23 | 19.6 | 21.3 |
| | SR259 | - | 3.0 | - | 3.0 | - | - | - |
| Photopolymerization initiator | Darocur 1173 | 0.70 | 0.70 | 0.92 | 0.92 | 0.92 | 0.92 | 0.92 |
| Polymerization initiator | MEHQ | 0.02 | 0.02 | - | - | - | - | - |
| | Genorad16 | - | - | 0.02 | 0.02 | 0.02 | 0.02 | 0.02 |
| Catalyst | LiNO₃ | 20.40 | 20.40 | - | - | - | - | - |
| | LiOH·H₂O | - | - | 8.46 | 8.46 | - | - | - |
| Solvent | Pure water | 20.60 | 20.60 | 22.90 | 22.90 | 22.90 | 22.90 | 22.90 |
| | IPA | 8.40 | 8.40 | 9.14 | 9.14 | 9.14 | 9.14 | 9.14 |
| Total mass | | 100 | 100 | 100 | 100 | 100 | 100 | 100 |

| | | | | | | | | |
|---|---|---|---|---|---|---|---|---|
| [0125] [Description of abbreviations in Table 1] · Monofunctional monomer DMAPAA-Q: dimethylaminopropylacrylamide methyl chloride quaternary salt (3-acrylamidepropyl trimethylammonium chloride) (manufactured by Kohjin Co., Ltd.) AMPS (registered trademark): 2-acrylamide-2-methylpropanesulfonic acid (manufactured by Lubrizol Ltd.) · Cross-linking agent MBA: methylene bisacrylamide (manufactured by Tokyo Chemical Industry Co., Ltd.) SR259: polyethylene glycol 200 acrylate (manufactured by Sartomer Company Inc.) · Polymerization initiator Darocur (registered trademark) 1173: manufactured by BASF Japan Ltd. MEHQ: monomethyl ether hydroquinone (manufactured by Sigma-Aldrich Co., LLC.) Genorad16: trade name, manufactured by Rahn AG · Solvent IPA: isopropyl alcohol (manufactured by Wako Pure Chemical Industries, Ltd.) | | | | | | | | |

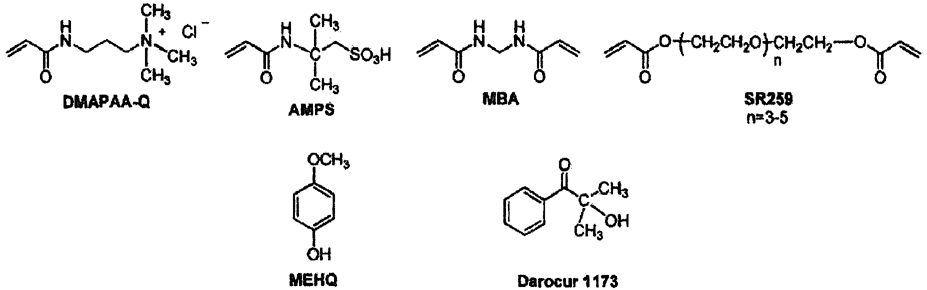

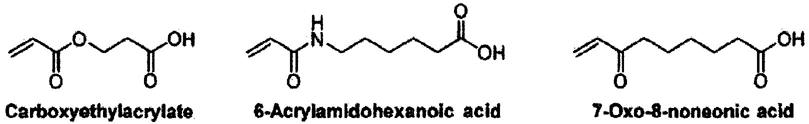

### Example 1

An aluminum plate was manually coated with a coating solution having the composition A-1 listed in the above-described Table 1 at a speed of approximately 5 m/min using a wire bar (stainless steel rod wound around with a wire having a diameter of 150 µm at 1 round/3 cm (length direction)) and then non-woven fabric (FO-2223-10, manufactured by Freudenberg, thickness of 100 µm) was impregnated with the coating solution. The extra coating solution was removed using a rod which was not wound around with a wire. The temperature of the coating solution at the time of coating was approximately 25°C (room temperature). The porous support impregnated with the coating solution was subjected to a polymerization curing reaction using a UV exposure machine (model: LIGHT HAMMER 10, manufactured by Fusion UV System Corporation, D-valve, conveyor speed: 9.5 m/min, 100% strength) and the coating solution was cured, thereby preparing a resin layer. The exposure amount in a UV-A region was 1,000 mJ/cm². The obtained membrane was removed from the aluminum plate and was stored in a 0.1 M NaCl solution at 25°C for 12 hours, thereby preparing a resin layer having a thickness of 140 µm which was supported by non-woven fabric.

A coating solution having the composition B-1 listed in the above-described Table 1 was added dropwise to the resin layer prepared in the above-described manner, the resin layer was uniformly spin-coated with the coating solution at a rotational speed of 2,000 rpm for 30 seconds using a spinner ASC-4000 (trade name, manufactured by ActesKyosan Inc.). The temperature of the coating solution at the time of spin-coating was approximately 25°C (room temperature). In the same manner as the resin layer, an auxiliary layer was prepared by causing a polymerization curing reaction in the coating solution having the composition B-1 using a UV exposure machine. The obtained ion exchange membrane was stored in a 0.1 M NaCl solution at 25°C for 12 hours, thereby preparing an auxiliary layer having a thickness of 5 µm on the resin layer which was supported by non-woven fabric.

### Examples 2 to 6, 9, and Comparative Example 1

Ion exchange membranes were prepared in the same manner as in Example 1 except that the compositions for forming a resin layer or an auxiliary layer or the thicknesses of these layers were changed as listed in the following Table 2.

### Examples 7 and 8

Ion exchange membranes were prepared in the same manner as in Example 1 except that the compositions for forming a resin layer or an auxiliary layer or the thicknesses of these layers were changed as listed in the following Table 2, and then the membranes were immersed in a 0.01 M NaOH aqueous solution at 25°C for 30 minutes so that the carboxy group of the cation exchange group in the auxiliary layer was converted into sodium salts (neutralization reaction).

### Example 10

An aluminum plate was manually coated with a coating solution having the composition A-1 listed in the above-described Table 1 at a speed of approximately 5 m/min using a wire bar (stainless steel rod wound around with a wire having a diameter of 150 µm at 1 round/3 cm (length direction)) and then non-woven fabric (FO-2223-10, manufactured by Freudenberg, thickness of 100 µm) was impregnated with the coating solution. The extra coating solution was removed using a rod which was not wound around with a wire. The temperature of the coating solution at the time of coating was approximately 25°C (room temperature). The porous support impregnated with the coating solution was subjected to a polymerization curing reaction using a UV exposure machine (model: LIGHT HAMMER 10, manufactured by Fusion UV System Corporation, D-valve, conveyor speed: 9.5 m/min, 100% strength) and the coating solution was cured, thereby forming a resin layer. The exposure amount in a UV-A region was 1,000 mJ/cm². The obtained membrane was removed from the aluminum plate to form a resin layer. The thickness of the resin layer was measured after the resin layer was stored in a 0.1 M NaCl solution for 12 hours, and the thickness thereof was 147 µm.

A coating solution having the composition B-1 listed in the above-described Table 1 was added dropwise to the resin layer prepared in the above-described manner, the resin layer was uniformly spin-coated with the coating solution at a rotational speed of 2,000 rpm for 30 seconds using a spinner ASC-4000 (trade name, manufactured by ActesKyosan Inc.). The temperature of the coating solution at the time of spin-coating was approximately 25°C (room temperature). In the same manner as the resin layer, an auxiliary layer having a thickness of 5 µm was prepared on one surface of the resin layer by causing a polymerization curing reaction in the coating solution having the composition B-1 using a UV exposure machine. Next, similarly, the coating solution having the composition B-1 listed in the above-described Table 1 was added dropwise to the resin layer on the opposite side to the formed auxiliary layer, the resin layer was uniformly spin-coated with the coating solution at a rotational speed of 2,000 rpm for 30 seconds using a spinner ASC-4000 (trade name, manufactured by ActesKyosan Inc.). The temperature of the coating solution at the time of spin-coating was approximately 25°C (room temperature). In the same manner as the resin layer, auxiliary layers were prepared on both surfaces of the resin layer by causing a polymerization curing reaction in the coating solution having the composition B-1 using a UV exposure machine. After the obtained ion exchange membrane was stored in a 0.1 M NaCl solution for 12 hours, the thickness of the auxiliary layers was measured. The thickness of the auxiliary layers provided on both surfaces of the resin layer was 10 µm in total thickness of both surfaces. In this manner, an ion exchange membrane having auxiliary layers on both surfaces of the resin layer supported by non-woven fabric was prepared.

The following items of the ion exchange membranes prepared in Examples 1 to 10 and Comparative Example 1 were evaluated. The obtained results are collectively listed in the following Table 2.

### [Film thickness]

When resin layers and auxiliary layers for measurement were provided, a sample with these layers and a sample without these layers were prepared and immersed in 0.1 M NaCl aqueous solution at 25°C for 12 hours. Further, the films were taken out, water on the surfaces was wiped off, and then the thickness of each sample was all measured using a micrometer. The film thickness of provided layers was acquired from a different in film thickness of the sample with the layers and the sample without the layers.

### [Ion exchange capacity]

The ion exchange capacity was measured using a method described in "Membranology Experimental Methods" written by Masayoki Nakagaki, pp. 193 to 195 (1984).
Further, the measurement values listed in the following Table 2 were obtained by measuring the anion exchange capacity and the cation exchange capacity with respect to composite films after the surface layers were formed. From these ratios, the ion exchange capacity ratio with the resin layer and the auxiliary layer were calculated.

### [Electrical resistance ER (Ω·cm2) of film]

Both surfaces of a film immersed in a 0.5 M NaNO₃ aqueous solution for approximately 2 hours were wiped using dry filter paper and the film was interposed between two chambers of a cell (effective film area of 1 cm², a Ag/AgCl reference electrode (manufactured by Metrohm Ltd.) was used as an electrode). Both chambers were respectively filled with 100 mL of NaNO₃ aqueous solutions with the same concentration and allowed to stand in a constant temperature water tank at 25°C until the both chambers reached equilibrium, electrical resistance r₁ was measured using an AC bridge (frequency of 1,000 Hz) after the liquid temperature in the cell reached 25°C. The film was removed so that only the 0.5 M NaNO₃ aqueous solution was left, electrical resistance r₂ between electrodes was measured, and electrical resistance r of the film was acquired using r1- r2. This was set to electrical resistance ER (0.5 M NaNO₃).

The electrical resistance ER (0.5 M Na₂SO₄) and the electrical resistance ER (0.5 M MgCl₂) of a film were measured in the same manner as the electrical resistance ER (0.5 M NaNO₃) of a film except that the solution used for measurement was changed to Na₂SO₄ or MgCl₂. The measurement results are listed in the following Table 2. Further, the electrical resistance ER of a film was abbreviated as "ER" in the following Table 2.

### [Peeling resistance of auxiliary layer]

The electrical resistances of the above-described ion exchange membranes before and after the membranes were irradiated with ultrasonic waves for 60 minutes were measured using an ultrasonic cleaner US-4 (manufactured by ASONE Corporation). When a change in electrical resistance of a membrane was small, this means that peeling or partial peeling of an auxiliary layer did not occur.
The electrical resistance values of the membrane after being irradiated with ultrasonic waves were described in parentheses below the values of electrical resistance ER or the ER ratio of each membrane listed in the following Table 2.

**[Table 2]**

| Items | Details of items | Auxiliary layer on resin layer | | | | | | | | | | Same auxiliary layers on both surfaces of resin layer |
|---|---|---|---|---|---|---|---|---|---|---|---|---|
| | | Comparative Example 1 | Example 1 | Example 2 | Example 3 | Example 4 | Example 5 | Example 6 | Example 7 | Example 8 | Example 9 | Example 10 |
| Constituent layer | Composition for resin layer | A-1 | A-1 | A-1 | A-1 | B-1 | A-2 | B-2 | A-1 | A-1 | A-1 | A-1 |
| | Composition for auxiliary layer | | B-1 | B-1 | B-1 | A-1 | B-2 | A-2 | B-3 | B-4 | B-5 | B-1 |
| Thickness | Film thickness of resin layer [µm] | 140 | 142 | 141 | 143 | 144 | 143 | 143 | 141 | 138 | 139 | 147 |
| | Film thickness of auxiliary laver [µm] | | 5 | 27 | 46 | 6 | 6 | 5 | 6 | 4 | 4 | 10 |
| | Total film thickness of layers [µm] | 140 | 147 | 168 | 189 | 150 | 149 | 148 | 147 | 142 | 143 | 157 |
| Performance | Anion exchange capacity [meq/g drymem ^{note 1)}] | 1.5 | 1.5 | 1.4 | 1.5 | 0.24 | 1.5 | 0.25 | 1.5 | 1.4 | 1.5 | 1.5 |
| | Cation exchange capacity [meq/g drymem ^{note 1)}] | | 0.27 | 0.34 | 0.88 | 1.4 | 0.25 | 1.3 | 0.29 | 0.21 | 0.22 | 0.29 |
| | Ion exchange capacity ratio Auxiliary layer/resin layer | 0% | 18% | 24% | 59% | 17% | 17% | 19% | 19% | 15% | 15% | 19% |
| | ER(0.5M NaNO₃) [Ω·cm²] | 2.8 | 3.4(3.4) | 4.8 (4.8) | 6.2 (6.2) | 3.2 (3.0) | 3.8(3.8) | 3.4 (3.4) | 2.7(2.7) | 2.8(3.1) | 2.5(2.9) | 3.6 (3.6) |
| | ER(0.5M Na₂SO₄) [Ω·cm²] | 4.5 | 13.8 (13.7) | 19.1(19.1) | 17.0(16.9) | | 14.0 (14.0) | | 11.1(11.1) | 10.5(13.7) | 10.8(13.7) | 18.0 (17.9) |
| | ER(0.5M MgCl₂) [Ω·cm²] | | | | | 11.3(11.3) | | 12.0(11.9) | | | | |
| | ER ratio (NaNO₃/Na₂SO₄) | 1.6 | 4.1 (4.0) | 4.0 (4.0) | 2.7(2.7) | | 3.7(3.7) | | 4.1(4.0) | 3.8(3.7) | 4.3 (4.3) | 5.0 (5.0) |
| | ER ratio (NaNO₃/MgCl₂) | | | | | 3.5(3.5) | | 3.5(3.5) | | | | |

| | | | | | | | | | | | | |
|---|---|---|---|---|---|---|---|---|---|---|---|---|
| Note1) drymem indicates the mass of the entire membrane in a case where the resin layer on which the auxiliary layer was formed was dried. * The numerical values in the parentheses of the ER and the ER ratio are values after the peeling resistance test was performed (the same membranes for measurement were used). | | | | | | | | | | | | |

The ER ratios of the ion exchange membranes of Examples 1 to 10 are 1.7 to 3 times the ER ratio of the electrical resistance of Comparative Example 1 in which the auxiliary layer with an opposite charge was not provided. Further, the ER ratio was 5.0, which was the greatest, in Example 10 in which auxiliary layers were provided on both surfaces of the resin layer.
As a result, it was understood that the ion exchange membranes of Examples 1 to 10 have excellent selective permeability of monovalent ions such as nitric acid ions.
Here, from the comparison of Examples 1 to 3, it was understood that the thickness of the auxiliary layer is increased, the cation exchange capacity is increased, and then the ion exchange capacity ratio (auxiliary layer/resin layer) is increased, and thus the electrical resistance ER (0.5 M, NaNO₃) of sodium nitrate is increased. Consequently, the ER ratio is decreased in conversely.
A negative charge of the auxiliary layer electrostatically repels an anion (NO₃- or SO₄²⁻) permeating into the resin layer on the surface. Since SO₄²⁻ having a higher valence is more strongly repelled, the ER is increased and the ER ratio showing selective permeability of monovalent ions is increased (selective ER ratio is expressed). However, it is assumed that repulsive force with respect to monovalent ions as well as divalent ions is increased and thus the ER ratio is decreased when the auxiliary layer becomes thick.
Further from the comparison of Examples 1 and 4, in a case where ion exchange resins contained in the resin layers and the auxiliary layers were replaced, that is, in Example 1 in which an ion exchange polymer having an anion exchange group was used for the resin layer and Example 4 in which an ion exchange polymer having a cation exchange group was used for the resin layer, the ion exchange capacity ratios are 17 to 18%, which are approximately the same. Further, divalent ions have a difference in sulfuric acid ions and magnesium ions, but the ER ratio thereof of Example 4 is 3.5 while the ER ratio thereof of Example 1 is 4.1. The selective permeability of monovalent ions of Example 1 is excellent compared to the selective permeability of Example 4.
In Examples 5 and 6 in which both of diacrylic acid amide and diacrylic acid ester were used for a cross-linking agent, the ER ratios were 3.5 to 3.7 and the selective permeability of monovalent ions is approximately the same as the corresponding Examples 1 and 4. Even when the selective permeability of monovalent ions was the same even when the ion exchange resins contained in the resin layer and the auxiliary layer were replaced.
As described above, the permeability of sulfuric acid ions with respect to nitric acid ions was able to be degraded by expressing the selective ER ratio by forming the auxiliary layer. In this manner, for example, in a case where ground water was subjected to an electrodialysis treatment, calcium ions contained in the ground water permeated into the membrane to precipitate sulfuric acid ions and sparingly soluble salts. Therefore, the possibility of scaling causing clogging was able to be prevented.

In addition, in the ion exchange membranes of Examples 1 to 10, it is understood that film resistance values after irradiation with ultrasonic waves were not almost decreased and the peeling resistance of the auxiliary layers is excellent. Unlike the case where an ion exchange membrane was produced using a method of bonding an anion exchange membrane and a cation exchange membrane to each other and cross-linking the produced membrane with a cross-linking agent such as a polyvalent acylating agent as in the related art, the peeling resistance of the membrane of the present invention is excellent because the adhesiveness is improved through entanglement of polymer chains or the like by a polymerization solution, which is a composition for forming an auxiliary layer, permeating into a resin layer having a cross-linked structure to cause a polymerization curing reaction accompanied by cross-linking.

In addition, as is evident from the processes of producing ion exchange membranes of the examples of the present invention, the resin layer and the auxiliary layer are formed through photopolymerization rapidly and efficiently. Further, since a monofunctional monomer that forms an ion exchange polymer has a charge in advance, an ionization process after film formation as in the related art is unnecessary.

The present invention has been described with reference to embodiments, but any detailed description of the invention is not intended to be limited unless otherwise specified.
The appended claims should be broadly interpreted within the range not departing from the spirit and the scope of the invention.

The present application claims priority based on Japanese Patent Application No. 2014-165310 filed on August 14, 2014 in Japan and Japanese Patent Application No. 2015-009365 filed on January 21, 2015 in Japan and the contents of which are incorporated herein by reference.

## Claims

1. A functional polymer membrane comprising:
a porous support; and
a resin layer and an auxiliary layer which are supported by the porous support,
wherein both of the resin layer and the auxiliary layer contain an ion exchange polymer having one of an anion exchange group or a cation exchange group,
a charge of the ion exchange group of the ion exchange polymer included in the resin layer is opposite to a charge of the ion exchange group of the ion exchange polymer included in the auxiliary layer, and
both of the ion exchange polymers respectively included in the resin layer and the auxiliary layer are polymers having a unit obtained from an acryloyl group which may have an alkyl group at an α-position.

2. The functional polymer membrane according to claim 1,
wherein the acryloyl group which may have an alkyl group at the α-position is an acryloylamino group or an acryloyloxy group which may have an alkyl group at the α-position.

3. The functional polymer membrane according to claim 1 or 2,
wherein the ion exchange polymer which includes the anion exchange group has a unit represented by the following Formula (IA), 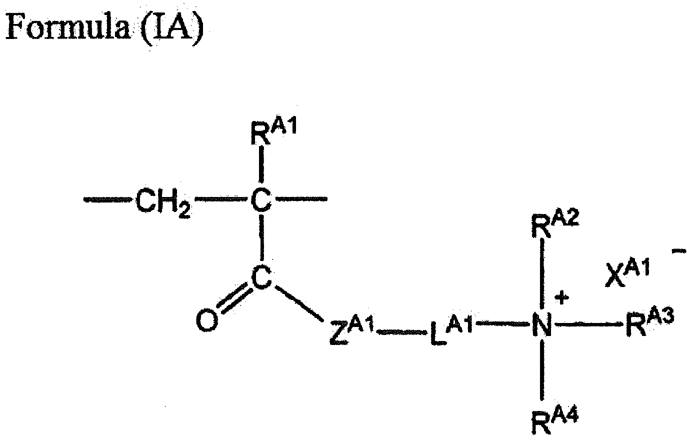 in Formula (IA), R^{A1} represents a hydrogen atom or an alkyl group, R^{A2} to R^{A4} each independently represent an alkyl group or an aryl group, and here, two or more of R^{A2} to R^{A}4 may be bonded to each other to form a ring, Z^{A1} represents -O- or -N(Ra)-, and here, Ra represents a hydrogen atom or an alkyl group, L^{A1} represents an alkylene group, and X^{A1} represents a halogen ion or an aliphatic or aromatic carboxylic acid ion.

4. The functional polymer membrane according to any one of claims 1 to 3,
wherein the ion exchange polymer which includes the cation exchange group has a unit represented by the following Formula (IC), 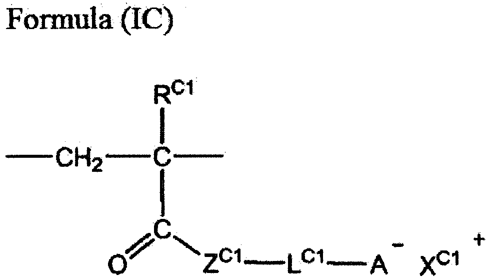 in Formula (IC), R^{C1} represents a hydrogen atom or an alkyl group, Z^{C1} represents -O-, -N(Ra)-, or an alkylene group, and here, Ra represents a hydrogen atom or an alkyl group, L^{C1} represents an alkylene group or an arylene group, A⁻ represents SO₃⁻ or COO⁻, and X^{C1} represents a hydrogen atom or an inorganic or organic cation.

5. The functional polymer membrane according to any one of claims 1 to 4,
wherein both of the ion exchange polymers included in the resin layer and the auxiliary layer have a cross-linked structure.

6. The functional polymer membrane according to any one of claims 1 to 5,
wherein the ion exchange polymers included in the resin layer and the auxiliary layer have a unit represented by the following Formula (ICL), 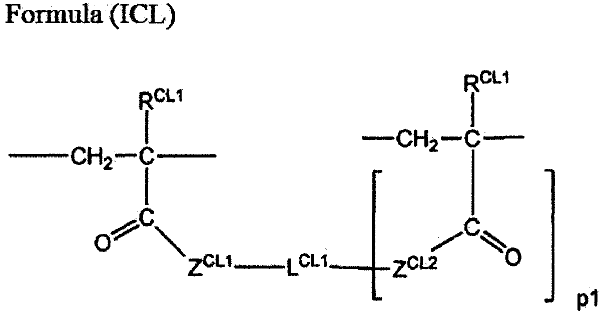 in Formula (ICL), R^{CL1} represents a hydrogen atom or an alkyl group, Z^{CL1} and Z^{CL2} each independently represent -O- or -N(Ra)-, and here, Ra represents a hydrogen atom or an alkyl group, L^{CL1} represents a p1 + 1 valent linking group having 2 or more carbon atoms, and p1 represents an integer of 1 or greater.

7. The functional polymer membrane according to claim 6,
wherein the linking group as L^{CL1} of the above-described Formula (ICL) does not have an ion exchange group.

8. The functional polymer membrane according to claim 6 or 7,
wherein the linking group as L^{CL1} of the above-described Formula (ICL) is an alkylene group or an arylene group.

9. The functional polymer membrane according to any one of claims 1 to 8,
wherein the ion exchange group included in the ion exchange polymer of the resin layer is an anion exchange group.

10. The functional polymer membrane according to any one of claims 1 to 8,
wherein the ion exchange group included in the ion exchange polymer of the resin layer is a cation exchange group.

11. The functional polymer membrane according to any one of claims 1 to 10,
wherein the thickness of the auxiliary layer is 50% or less of the thickness of the resin layer.

12. The functional polymer membrane according to any one of claims 1 to 11,
wherein the thickness of the auxiliary layer is 20% or less of the thickness of the resin layer.

13. The functional polymer membrane according to any one of claims 1 to 12,
wherein the thickness of the auxiliary layer is 10% or less of the thickness of the resin layer.

14. The functional polymer membrane according to any one of claims 1 to 13,
wherein the porous support is non-woven fabric.

15. The functional polymer membrane according to any one of claims 1 to 14, which is an in exchange membrane.

16. A stack comprising:
the functional polymer membrane according to any one of claims 1 to 15.

17. A device comprising:
the functional polymer membrane according to any one of claims 1 to 15.

18. A method of producing a functional polymer membrane including a porous support, and a resin layer and an auxiliary layer which are supported by the porous support, in which both of the resin layer and the auxiliary layer contain an ion exchange polymer having one of an anion exchange group or a cation exchange group, a charge of the ion exchange group of the ion exchange polymer included in the resin layer is opposite to a charge of the ion exchange group of the ion exchange polymer included in the auxiliary layer, and both of the ion exchange polymers respectively included in the resin layer and the auxiliary layer are polymers having a unit obtained from an acryloyl group which may have an alkyl group at the α-position, the method comprising:
a process of impregnating or coating the porous support with a composition for forming the resin layer and forming the resin layer through a polymerization curing reaction; and
a process of coating the porous support with a composition for forming the auxiliary layer to form the auxiliary layer through a polymerization curing reaction.

19. The method of producing a functional polymer membrane according to claim 18,
wherein the acryloyl group which may have an alkyl group at the α-position is an acryloylamino group or an acryloyloxy group which may have an alkyl group at the α-position.

20. The method of producing a functional polymer membrane according to claim 18 or 19,
wherein the composition for forming the resin layer or the composition for forming the auxiliary layer contains a compound represented by the following Formula (MA), 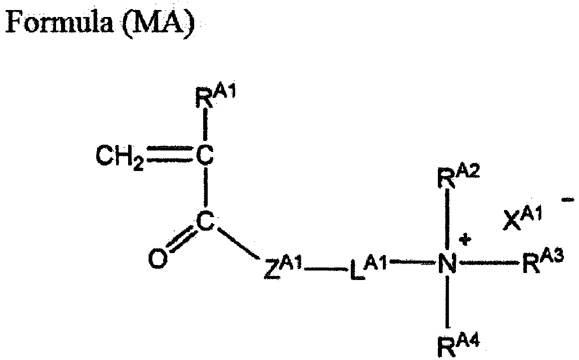 in Formula (MA), R^{A1} represents a hydrogen atom or an alkyl group, R^{A2} to R^{A4} each independently represent an alkyl group or an aryl group, and here, two or more of R^{A2} to R^{A4} may be bonded to each other to form a ring, Z^{A1} represents -O- or -N(Ra)-, and here, Ra represents a hydrogen atom or an alkyl group, L^{A1} represents an alkylene group, and X^{A1} represents a halogen ion or an aliphatic or aromatic carboxylic acid ion.

21. The method of producing a functional polymer membrane according to any one of claims 18 to 20,
wherein the composition for forming the resin layer or the composition for forming the auxiliary layer contains a compound represented by the following Formula (MC), 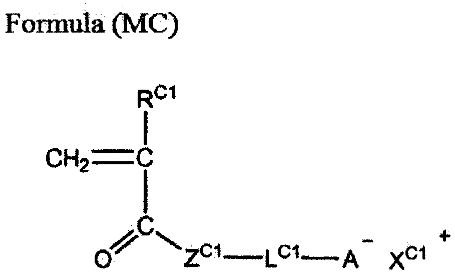 in Formula (MC), R^{C1} represents a hydrogen atom or an alkyl group, Z^{C1} represents -O-, -N(Ra)-, or an alkylene group, and here, Ra represents a hydrogen atom or an alkyl group, L^{C1} represents an alkylene group or an arylene group, A⁻ represents SO₃⁻ or COO⁻, and X^{C1} represents a hydrogen atom or an inorganic or organic cation.

22. The method of producing a functional polymer membrane according to any one of claims 18 to 21,
wherein both of the composition for forming the resin layer or the composition for forming an auxiliary layer contain a cross-linking agent.

23. The method of producing a functional polymer membrane according to claim 22,
wherein the cross-linking agent is a compound represented by the following Formula (CL), 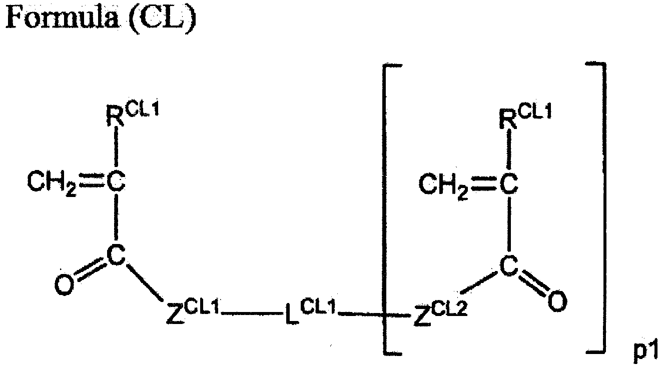 in Formula (CL), R^{CL1} represents a hydrogen atom or an alkyl group, Z^{CL1} and Z^{CL2} each independently represent -O- or -N(Ra)-, and here, Ra represents a hydrogen atom or an alkyl group, L^{CL1} represents a p1 + 1 valent linking group having 2 or more carbon atoms, and p1 represents an integer of 1 or greater.

24. The method of producing a functional polymer membrane according to claim 23,
wherein the linking group as L^{CL1} of the above-described Formula (CL) does not have an ion exchange group.

25. The method of producing a functional polymer membrane according to any one of claims 18 to 24,
wherein the ion exchange group included in the ion exchange polymer of the resin layer is an anion exchange group.

26. The method of producing a functional polymer membrane according to any one of claims 18 to 25,
wherein the thickness of the auxiliary layer is 50% or less of the thickness of the resin layer.

27. The method of producing a functional polymer membrane according to any one of claims 18 to 26,
wherein the porous support is non-woven fabric.

28. The method of producing a functional polymer membrane according to any one of claims 18 to 27,
wherein both of the composition for forming the resin layer and the composition for forming the auxiliary layer contain a polymerization initiator.

29. The method of producing a functional polymer membrane according to any one of claims 18 to 28,
wherein the polymerization curing reaction is performed by irradiation with ultraviolet rays.

## Amended claims

### Amended claims under Art. 19.1 PCT

**1.** (Amended) A functional polymer membrane comprising:
a porous support; and
a resin layer and an auxiliary layer which are supported by the porous support,
wherein both of the resin layer and the auxiliary layer contain an ion exchange polymer having one of an anion exchange group or a cation exchange group,
a charge of the ion exchange group of the ion exchange polymer included in the resin layer is opposite to a charge of the ion exchange group of the ion exchange polymer included in the auxiliary layer,
both of the ion exchange polymers respectively included in the resin layer and the auxiliary layer are polymers having a unit obtained from an acryloylamino group which may have an alkyl group at an α-position, and
the thickness of the auxiliary layer is 50% or less of the thickness of the resin layer.

**3.** (Amended) The functional polymer membrane according to claim 1,
wherein the ion exchange polymer which includes the anion exchange group has a unit represented by the following Formula (IA), 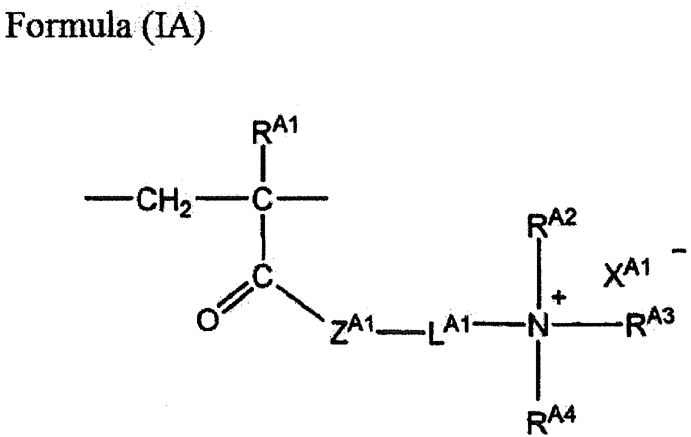 in Formula (IA), R^{A1} represents a hydrogen atom or an alkyl group, R^{A2} to R^{A4} each independently represent an alkyl group or an aryl group, and here, two or more of R^{A2} to R^{A}4 may be bonded to each other to form a ring, Z^{A1} represents -N(Ra)-, and here, Ra represents a hydrogen atom or an alkyl group, L^{A1} represents an alkylene group, and X^{A1} represents a halogen ion or an aliphatic or aromatic carboxylic acid ion.

**4.** (Amended) The functional polymer membrane according to claim 1 or 3,
wherein the ion exchange polymer which includes the cation exchange group has a unit represented by the following Formula (IC), 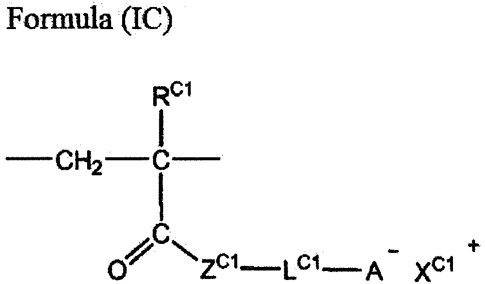 in Formula (IC), R^{C1} represents a hydrogen atom or an alkyl group, Z^{C1} represents, -N(Ra)-, and here, Ra represents a hydrogen atom or an alkyl group, L^{C1} represents an alkylene group or an arylene group, A⁻ represents SO₃⁻ or COO⁻, and X^{C1} represents a hydrogen atom or an inorganic or organic cation.

**5.** (Amended) The functional polymer membrane according to any one of claims 1, 3 and 4,
wherein both of the ion exchange polymers included in the resin layer and the auxiliary layer have a cross-linked structure.

**6.** (Amended) The functional polymer membrane according to any one of claims 1, and 3 to 5,
wherein the ion exchange polymers included in the resin layer and the auxiliary layer have a unit represented by the following Formula (ICL), 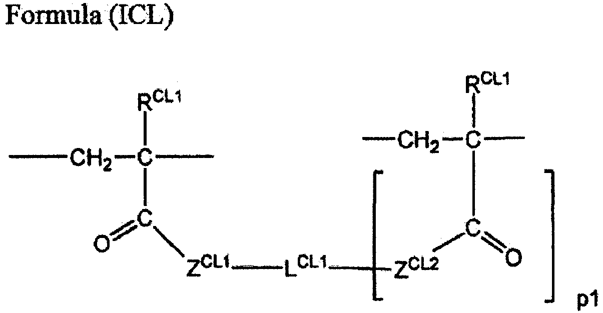 in Formula (ICL), R^{CL1} represents a hydrogen atom or an alkyl group, Z^{CL1} and Z^{CL2} each independently represent -O- or -N(Ra)-, and here, Ra represents a hydrogen atom or an alkyl group, L^{CL1} represents a p1 + 1 valent linking group having 2 or more carbon atoms, and p1 represents an integer of 1 or greater.

**7.** The functional polymer membrane according to claim 6,
wherein the linking group as L^{CL1} of the above-described Formula (ICL) does not have an ion exchange group.

**8.** The functional polymer membrane according to claim 6 or 7,
wherein the linking group as L^{CL1} of the above-described Formula (ICL) is an alkylene group or an arylene group.

**9.** (Amended) The functional polymer membrane according to any one of claims 1, and 3 to 8,
wherein the ion exchange group included in the ion exchange polymer of the resin layer is an anion exchange group.

**10.** (Amended) The functional polymer membrane according to any one of claims 1, and 3 to 8,
wherein the ion exchange group included in the ion exchange polymer of the resin layer is a cation exchange group.

**12.** (Amended) The functional polymer membrane according to any one of claims 1, and 3 to 10,
wherein the thickness of the auxiliary layer is 20% or less of the thickness of the resin layer.

**13.** (Amended) The functional polymer membrane according to any one of claims 1, 3 to 10, and 12,
wherein the thickness of the auxiliary layer is 10% or less of the thickness of the resin layer.

**14.** (Amended) The functional polymer membrane according to any one of claims 1, 3 to 10, 12 and 13,
wherein the porous support is non-woven fabric.

**15.** (Amended) The functional polymer membrane according to any one of claims 1, 3 to 10, 12, 13 and 14, which is an in exchange membrane.

**16.** (Amended) A stack comprising:
the functional polymer membrane according to any one of claims 1, 3 to 10, 12, 13, 14 and 15.

**17.** (Amended) A device comprising:
the functional polymer membrane according to any one of claims 1, 3 to 10, 12, 13, 14 and 15.

**18.** A method of producing a functional polymer membrane including a porous support, and a resin layer and an auxiliary layer which are supported by the porous support, in which both of the resin layer and the auxiliary layer contain an ion exchange polymer having one of an anion exchange group or a cation exchange group, a charge of the ion exchange group of the ion exchange polymer included in the resin layer is opposite to a charge of the ion exchange group of the ion exchange polymer included in the auxiliary layer, and both of the ion exchange polymers respectively included in the resin layer and the auxiliary layer are polymers having a unit obtained from an acryloyl group which may have an alkyl group at the α-position, the method comprising:
a process of impregnating or coating the porous support with a composition for forming the resin layer and forming the resin layer through a polymerization curing reaction; and
a process of coating the porous support with a composition for forming the auxiliary layer to form the auxiliary layer through a polymerization curing reaction.

**19.** The method of producing a functional polymer membrane according to claim 18,
wherein the acryloyl group which may have an alkyl group at the α-position is an acryloylamino group or an acryloyloxy group which may have an alkyl group at the α-position.

**20.** The method of producing a functional polymer membrane according to claim 18 or 19,
wherein the composition for forming the resin layer or the composition for forming the auxiliary layer contains a compound represented by the following Formula (MA), 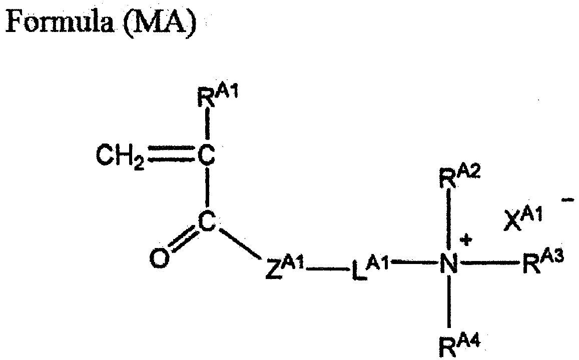 in Formula (MA), R^{A1} represents a hydrogen atom or an alkyl group, R^{A2} to R^{A4} each independently represent an alkyl group or an aryl group, and here, two or more of R^{A2} to R^{A4} may be bonded to each other to form a ring, Z^{A1} represents -O- or -N(Ra)-, and here, Ra represents a hydrogen atom or an alkyl group, L^{A1} represents an alkylene group, and X^{A1} represents a halogen ion or an aliphatic or aromatic carboxylic acid ion.

**21.** The method of producing a functional polymer membrane according to any one of claims 18 to 20,
wherein the composition for forming the resin layer or the composition for forming the auxiliary layer contains a compound represented by the following Formula (MC), 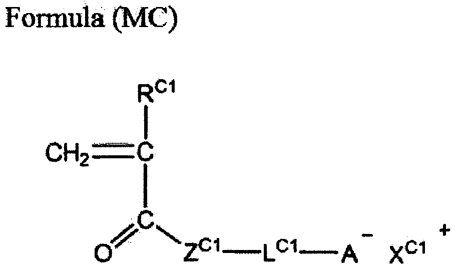 in Formula (MC), R^{C1} represents a hydrogen atom or an alkyl group, Z^{C1} represents -O-, -N(Ra)-, or an alkylene group, and here, Ra represents a hydrogen atom or an alkyl group, L^{C1} represents an alkylene group or an arylene group, A⁻ represents SO₃⁻ or COO⁻, and X^{C1} represents a hydrogen atom or an inorganic or organic cation.

**22.** The method of producing a functional polymer membrane according to any one of claims 18 to 21,
wherein both of the composition for forming the resin layer or the composition for forming an auxiliary layer contain a cross-linking agent.

**23.** The method of producing a functional polymer membrane according to claim 22,
wherein the cross-linking agent is a compound represented by the following Formula (CL), 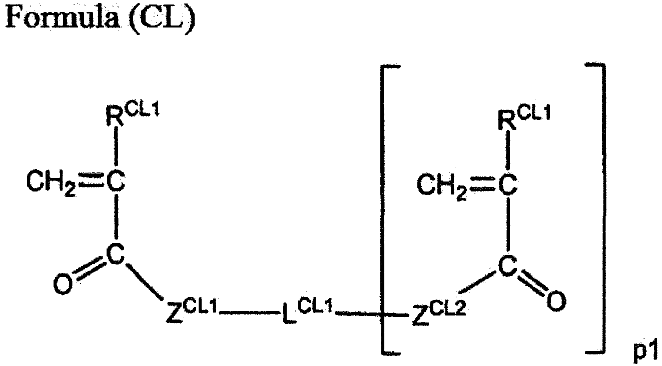 in Formula (CL), R^{CL1} represents a hydrogen atom or an alkyl group, Z^{CL1} and Z^{CL2} each independently represent -O- or -N(Ra)-, and here, Ra represents a hydrogen atom or an alkyl group, L^{CL1} represents a p1 + 1 valent linking group having 2 or more carbon atoms, and p1 represents an integer of 1 or greater.

**24.** The method of producing a functional polymer membrane according to claim 23,
wherein the linking group as L^{CL1} of the above-described Formula (CL) does not have an ion exchange group.

**25.** The method of producing a functional polymer membrane according to any one of claims 18 to 24,
wherein the ion exchange group included in the ion exchange polymer of the resin layer is an anion exchange group.

**26.** The method of producing a functional polymer membrane according to any one of claims 18 to 25,
wherein the thickness of the auxiliary layer is 50% or less of the thickness of the resin layer.

**27.** The method of producing a functional polymer membrane according to any one of claims 18 to 26,
wherein the porous support is non-woven fabric.

**28.** The method of producing a functional polymer membrane according to any one of claims 18 to 27,
wherein both of the composition for forming the resin layer and the composition for forming the auxiliary layer contain a polymerization initiator.

**29.** The method of producing a functional polymer membrane according to any one of claims 18 to 28,
wherein the polymerization curing reaction is performed by irradiation with ultraviolet rays.

Statement under Art. 19.1 PCT
In Claim 1, 'an acryloyl group' was amended to "an acryloylamino group". This amendment was supported by the description in paragraph [0033] of the Description. Further, the content in Claim 11 was incorporated with the thus-amended Claim 1 to limit it.

Claims 2 and 11 were canceled. With the above claim amendments, the claim dependency was adjusted, to collect.
